(19) **Europäisches Patentamt / European Patent Office / Office européen des brevets**

(11) **EP 4 246 269 B1**

(12) **EUROPEAN PATENT SPECIFICATION**

(45) Date of publication and mention
of the grant of the patent:
**11.03.2026 Bulletin 2026/11**

(21) Application number: **21914202.3**

(22) Date of filing: **24.12.2021**

(51) International Patent Classification (IPC):
**G05D 1/617** (2024.01)    **G05D 1/242** (2024.01)
**G05D 1/648** (2024.01)    G05D 105/10 (2024.01)
G05D 107/40 (2024.01)    G05D 109/10 (2024.01)
G05D 111/30 (2024.01)

(52) Cooperative Patent Classification (CPC):
**G05D 1/242; G05D 1/617; G05D 1/6484;**
G05D 2105/10; G05D 2107/40; G05D 2109/10;
G05D 2111/30

(86) International application number:
**PCT/CN2021/141231**

(87) International publication number:
**WO 2022/143465 (07.07.2022 Gazette 2022/27)**

(54) **POSITION CORRECTION METHOD FOR ROBOT, AND RELATED DEVICE**

POSITIONSKORREKTURVERFAHREN FÜR ROBOTER UND ZUGEHÖRIGE VORRICHTUNG

PROCÉDÉ DE CORRECTION DE POSITION POUR ROBOT, ET DISPOSITIF ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.12.2020 CN 202011632337**

(43) Date of publication of application:
**20.09.2023 Bulletin 2023/38**

(73) Proprietor: **Huawei Technologies Co., Ltd.
Shenzhen, Guangdong 518129 (CN)**

(72) Inventors:
• **XUE, Jingtao**
**Shenzhen, Guangdong 518129 (CN)**
• **WANG, Hui**
**Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 106 919 171    CN-A- 107 450 561
CN-A- 109 955 246    CN-A- 112 000 109
CN-U- 210 871 441    KR-A- 20180 084 267
US-A1- 2005 273 967    US-A1- 2010 152 944
US-A1- 2012 065 829    US-A1- 2014 088 761
US-A1- 2019 008 347    US-A1- 2020 178 750

## Description

### TECHNICAL FIELD

This application relates to the field of artificial intelligence, and in particular, to a robot position correction method and a related device.

### BACKGROUND

With improvement of living standard, people pay increasingly more attention to cleanness of home environment. Bedding such as quilts and mattresses is household items in direct contact with people, and is prone to be infested by dust, mites, or bacteria, which is harmful to human health. A handheld bed cleaner is developed to sterilize and disinfect bedding. The bed cleaner is equipped with an apparatus for sterilization and disinfection, and a user needs to manually operate the bed cleaner to press each corner of a bed for a long time. Because the user needs to manually operate the bed cleaner for a long time, and the bed cleaner is bulky, cleaning work is tiresome for the user. Consequently, the handheld bed cleaner is low in practicability.

Therefore, an intelligent cleaning robot is proposed, and the robot uses an absolute positioning technology. Specifically, the robot stores an environment of an entire cleaning region, and collects a surrounding environment of the robot in real time, to determine an absolute position of the robot in the cleaning region based on a current surrounding environment of the robot and the environment of the entire cleaning region.

However, when the cleaning robot works on a surface of a soft cotton household item, the robot may fall into the household item due to gravity. Consequently, the robot cannot collect a surrounding environment. In other words, the robot cannot be located, and a position of the robot cannot be corrected.

US2012065829A1 discloses a wall-following moving device consists of a base; a determining drive unit; multiple collision sensing units; two signal transceiver units arranged at the same lateral side of the base parallel to the moving direction of the base for synchronously transmitting and receiving specific signals, and being electrically connected to the determining drive unit; and a moving element mounted to the base and controlled by the determining drive unit to perform various movements. The determining drive unit compares two reflected signals from a wall received separately by two signal transceiver units, and uses the intensity difference of the signals as a basis to control the moving element to orientate the robot parallel to the wall. By an intricate coordination of the collision sensing units, two signal transceiver units, determining drive unit, and the moving element, the distance between the robot and a wall can be precisely determined and controlled.

US2019008347A1 discloses a self-propelled electronic device comprising a housing: when an obstacle is detected ahead while the housing is moving straight forward along a outbound or a return path while it travels in a zigzag manner in a closed region, the housing travels along the obstacle such that the obstacle is located on a predetermined side of the housing, and when the housing advances by a predetermined pitch width in a direction orthogonal to a back-and-forth direction during traveling along the obstacle, the housing changes its direction and moves straight forward along a next return path or outbound path, whereas, when the housing again returns to the outbound path or return path along which it has traveled before, during traveling along the obstacle, wherein if its orientation is reversed based on its orientation when the housing has traveled along the outbound path or the return path, the housing ends traveling.

US2005273967A1 discloses The invention pertains to a robot cleaning system that includes a robotic cleaner having a tactile sensor and a barrier unit, wherein the barrier unit is such that the tactile sensor on the robot cleaner is triggered by contact with the barrier unit. As a result the robot changes directions. The barrier unit can be adapted to avoid sliding, such as when the robot comes into contact with it. The anti-slide element can be projections such as hooks or rubber grommets and the like.

US2014088761A1 discloses a proximity sensor includes first and second sensors disposed on a sensor body adjacent to one another. The first sensor is one of an emitter and a receiver. The second sensor is the other one of an emitter and a receiver. A third sensor is disposed adjacent the second sensor opposite the first sensor. The third sensor is an emitter if the first sensor is an emitter or a receiver if the first sensor is a receiver. Each sensor is positioned at an angle with respect to the other two sensors. Each sensor has a respective field of view. A first field of view intersects a second field of view defining a first volume that detects a floor surface within a first threshold distance. The second field of view intersects a third field of view defining a second volume that detects a floor surface within a second threshold distance.

### SUMMARY

Embodiments of this application provide a robot position correction method and a related device. A relative positioning technology is used to correct a position of a robot based on a baseline, and a solution in which the robot automatically corrects a position in a moving process is provided.

To resolve the foregoing technical problem, embodiments of this application provide the following technical solutions.

The invention is defined by the appended claims. According to a first aspect, an embodiment of this application provides a robot position correction method, and the method may be used in the field of intelligent robots in the field of artificial intelligence. The method includes: An electronic device obtains a first actual distance between a robot and a baseline in a target direction and a first course angle of the robot relative to the baseline by using a radar/detection antenna of a radar. The baseline is a boundary of a target object, the target direction is a direction perpendicular to the baseline, the first course angle is an included angle between a moving direction of the robot and the baseline, the target object is an object related to a task executed by the robot, and the target object may specifically be a bed, a floor, a blanket, grass, or another object on which the robot can work. The electronic device obtains an expected distance between the robot and the baseline based on a planned path and a preset speed of the robot; and controls the robot to move based on the expected distance between the robot and the baseline in the target direction, the first actual distance, and the first course angle, so that a second actual distance between the moved robot and the baseline in the target direction is the expected distance.

In the implementation, an electromagnetic wave emitted by the radar can penetrate a cotton object or a silk object, and the radar can measure the actual distance between the robot and the baseline and the first course angle by emitting an electromagnetic wave, and control the robot to move based on the expected distance between the robot and the baseline, the actual distance, and the first course angle, so that the actual distance between the moved robot and the baseline is the expected distance. Therefore, a relative positioning technology is used to correct a position of the robot based on the baseline, and a solution of automatically correcting a position of the robot in a moving process is provided. In addition, the solution can be applied to a scenario in which the robot works on a cotton object or a silk object, and can also be applied to a scenario in which the robot is covered by a cotton object or a silk object. Because positioning of the robot does not depend on collecting a surrounding environment, this significantly reduces effect of a working environment on the robot in a moving process, and further significantly expands an application scenario of the robot.

In a possible implementation of the first aspect, that an electronic device controls the robot to move based on the expected distance between the robot and the baseline in the target direction, the first actual distance, and the first course angle, so that a second actual distance between the moved robot and the baseline in the target direction is the expected distance includes: The electronic device calculates a first error distance of the robot in the target direction based on the expected distance and the first actual distance, and controls the robot to rotate based on the first course angle, so that a first moving direction of the rotated robot is perpendicular to the baseline. The first moving direction may be a moving direction approaching the baseline or a direction away from the baseline. The electronic device controls the robot to move in the first moving direction based on the first error distance, that is, controls the robot to move by the first error distance in the first moving direction, so that the second actual distance between the moved robot and the baseline in the target direction is the expected distance. After controlling the robot to move by the first error distance in the first moving direction, the electronic device controls the robot to rotate based on the planned path of the robot, to rotate an actual course angle of the robot relative to the baseline to an expected course angle. It should be noted that a meaning of "controlling the robot to move by the first error distance in the first moving direction" herein means that the electronic device is intended to control the robot to move by the first error distance in the first moving direction, but in an actual situation, the robot may move by a third actual distance in the first moving direction. A difference between the third actual distance and the first error distance is small.

In the implementation, a specific implementation solution of correcting a distance of the robot in the target direction based on the expected distance, the first actual distance, and the first course angle of the baseline in the target direction is provided. During correction, the robot is first controlled to rotate based on the first course angle of the robot relative to the baseline, so that the first moving direction of the rotated robot is perpendicular to the baseline. Then, when the robot is controlled to move after the distance of the robot in the target direction is corrected, the robot needs to be rotated to the expected course angle of the robot. In other words, both the distance of the robot in the target direction and the course angle of the robot are corrected. This ensures that a moving path of the robot can be planned, and further ensures that the moving path of the robot can fully cover the entire target object.

In an implementation of the first aspect, before the electronic device obtains the first actual distance between the robot and the baseline in the target direction and the first course angle of the robot relative to the baseline, the method further includes: The electronic device collects first point cloud data of an environment in a target range of the robot by using the radar. The environment in the target range includes an environment in front of the robot in a current detection range of the radar. Further, a current orientation of the robot is used as a centerline, and the environment in the target range may include an environment in front of the robot in a range of a first angle about the centerline. In other words, a current detection range of a first radar is the range of the first angle about the centerline, and the range of the first angle may be 30 degrees, 50 degrees, 60 degrees, 80 degrees, or another value. Point cloud data is a set of points that indicate spatial distribution of an object and a surface feature of the object in a same spatial reference system. After spatial coordinates of each sampling point on a surface of an object in the environment in the target range are obtained, a set of points is obtained. When determining, based on the first point cloud data, that the boundary of the target object exists in a surrounding environment in the target range of the robot, the electronic device controls the robot to move towards the boundary of the target object, and detects whether the robot is located in an edge region of the target object when the robot moves towards the boundary of the target object. The edge region of the target object may also be referred to as a dangerous region of the target object, or a cliff region of the target object, and a probability that the robot falls from the edge region of the target object is greater than a probability that the robot falls from a non-edge region of the target object. It should be noted that two concepts of "a probability that the robot falls from the edge region of the target object" and "a probability that the robot falls from a non-edge region of the target object" are merely for ease of understanding the edge region of the target object. In an actual situation, the robot does not need to calculate "a probability that the robot falls from the target object" to distinguish the edge region and the non-edge region of the target object. In addition, the edge region of the target object is not a region with a fixed area. The robot determines edge regions and non-edge regions of a specific target object based on a detection result. In other words, the robot does not divide an edge region and a non-edge region of the target object, but determines edge regions and non-edge regions of the specific target object based on the detection result. When a distance between the robot and the boundary of the target object is less than a first threshold, and the robot is not located in the edge region of the target object, the boundary of the target object is determined as the baseline.

In the implementation, the solution in which the robot automatically determines the baseline is provided. Therefore, regardless of a position, of the target object, at which a user places the robot, the robot can find the baseline, and correct the position of the robot based on the baseline in a cleaning process. In addition, the baseline is not any detected line (namely, any boundary of the target object). Only when the distance between the robot and the boundary of the target object is less than the first threshold, and the robot is not located in the edge region, the boundary of the target object is determined as the baseline. In other words, the baseline is one boundary of the target object, and is not located in the edge region of the target object. This prevents the robot from falling from the target object in a process of searching for the baseline.

In a possible implementation of the first aspect, that the electronic device determines, based on the first point cloud data, that the boundary of the target object exists in a surrounding environment in the target range of the robot includes: The electronic device obtains at least one piece of prestored second point cloud data, and obtains a similarity between the first point cloud data and each of the at least one piece of second point cloud data. Each piece of second point cloud data indicates point cloud data, of a boundary of an object, that is collected by the radar, and relative angles between boundaries corresponding to different second point cloud data and the radar are different. If target point cloud data exists in the at least one piece of second point cloud data, the electronic device determines that the boundary of the target object exists in the surrounding environment in the target range of the robot. A similarity between the target point cloud data and the first point cloud data is greater than or equal to a preset similarity threshold. Alternatively, the electronic device performs a fitting operation on the first point cloud data, and if a fitting result of the first point cloud data is a linear function and a fitting error of the linear function is less than a preset error threshold, determines that the boundary of the target object exists in the surrounding environment in the target range of the robot. The fitting error indicates an aggregation degree of the first point cloud data relative to the linear function obtained through fitting. A larger aggregation degree of the first point cloud data relative to the linear function obtained through fitting indicates a smaller fitting error and a better fitting degree. A smaller aggregation degree of the first point cloud data relative to the linear function obtained through fitting indicates a larger the fitting error and a worse the fitting degree.

In the implementation, two manners of determining, based on the first point cloud data, whether the boundary of the target object exists in the surrounding environment in the target range of the robot are provided. This improves implementation flexibility of the solution.

In a possible implementation of the first aspect, before the electronic device obtains the first actual distance between the robot and the baseline in the target direction and the first course angle of the robot relative to the baseline, the method further includes: The electronic device controls the robot to move along the baseline, and when the robot moves to the edge region of the target object, controls the robot to stop moving and to rotate in situ by 180 degrees; and uses a current position point of the robot as a benchmark, uses a current orientation of the robot as a 0-degree orientation, and uses the benchmark as a start point at which the robot executes the task. The task may be mite removal, vacuuming, dehumidification, clothing ironing, mowing, bacterial sample collection, or another type of task. That an electronic device obtains a first actual distance between a robot and a baseline in a target direction and a first course angle of the robot relative to the baseline includes: When the robot executes the task, the electronic device obtains the first actual distance between the robot and the baseline in the target direction and the first course angle of the robot relative to the baseline.

In the implementation, because the baseline is a boundary of the target object, the benchmark is located in the edge region of the boundary, that is, the benchmark is a vertex of the target object, and the vertex of the target object is used as the start point at which the robot performs the task. Therefore, it is easier to plan a moving path of the robot, and a task execution path without repetition can be planned, so that the task execution path of the robot is more organized. This helps improve efficiency of a task execution process of the robot, and reduce task execution duration of the robot.

In a possible implementation of the first aspect, when the robot executes the task, a moving path is in a zigzag pattern, the moving path in the zigzag pattern includes a second moving direction and a third moving direction, the second moving direction is parallel to the baseline, and the third moving direction is perpendicular to the baseline. It should be noted that the electronic device expects the moving path of the robot to be in a zigzag pattern when the robot executes the task. However, there is an error between the moving path of the robot and an expected path in the moving process, and the electronic device corrects a position of the robot in the moving process. Therefore, an actual moving path of the robot is similar to but is not the same as a zigzag pattern.

In the implementation, when the robot executes the task, a vertex of the target object is used as the start point to control the robot to move in a path that is in a zigzag pattern, and the position of the robot and the course angle of the robot are corrected in time. Therefore, the moving path of the robot can fully cover the target object, and repetition of the moving path of the robot can be avoided.

In a possible implementation of the first aspect, before the electronic device controls the robot to move towards the boundary of the target object, the method further includes: The electronic device obtains at least one first distance between the robot and a detected object under the robot by using the radar, and selects a maximum distance from the at least one first distance as a target distance. That the electronic device detects whether the robot is located in an edge region of the target object when the robot moves towards the boundary of the target object includes: When the robot moves towards the boundary of the target object, the electronic device obtains a second distance between the robot and the detected object under the robot by using the radar; and when determining, based on the target distance and the second distance, that a first condition is met, determines that the robot is located in the edge region of the target object. The first condition indicates that a difference between the second distance and the target distance is greater than or equal to a second threshold.

In the implementation, the electronic device obtains the distance between the robot and the detected object under the robot in real time by using the radar, and the electromagnetic wave emitted by the radar can penetrate the cotton object or the silk object. Therefore, when the robot is not located in the edge region of the target object, the radar detects a distance between the robot and a bed plate/spring mattress. When the robot is located in the edge region of the target object, the radar detects a distance between the robot and a floor. The distance between the robot and the floor is much greater than the distance between the robot and the bed plate/spring mattress, and the solution implements detection of the edge region of the target object according to the principle. The target distance is a maximum value obtained from at least one distance between the robot and the bed plate/spring mattress. Because heights of cotton objects placed on beds of different users are different, a uniform target distance cannot be set. Based on the manner, provided in the solution, in which the electronic device automatically detects a distance by using the radar and generates the target distance, accuracy of determining an edge region by the robot can be improved, to prevent the robot from falling from the target object. In addition, the electromagnetic wave emitted by the radar can penetrate the cotton object. Therefore, if a size of a cotton object such as a quilt/cotton mattress on a bed is greater than a size of a bed plate, it may be determined, according to the solution, that the robot is in an edge region when the robot is located in an edge of the bed, so that the robot stops moving in time. Because the cotton object usually cannot support the robot, that is, cannot prevent the robot from falling, when the robot is located at an edge of the bed, the robot can stop moving in time, to prevent the robot from falling from the target object. This further prevents the user from wasting time on replacing the fallen robot on the target object, and ensures continuity of the moving process of the robot.

In a possible implementation of the first aspect, the electronic device adds the target distance and the second threshold, to obtain a third threshold; obtains, by using the radar, echo data corresponding to the detected object under the robot in real time, to generate a change curve corresponding to the echo data; further obtains the second distance between the robot and the detected object under the robot in real time; determines whether the second distance is greater than or equal to the third threshold; and if the second distance is greater than or equal to the third threshold, determines that the robot is located in the edge region of the target object.

In a possible implementation of the first aspect, the electronic device obtains, by using the radar, the second distance between the robot and the detected object under the robot in real time; calculates a difference between the second distance and the target distance; determines whether the difference between the second distance and the target distance is greater than or equal to the second threshold; and if the difference is greater than or equal to the second threshold, determines that the robot is located in the edge region of the target object.

In a possible implementation of the first aspect, the method further includes: When the robot executes the task, the electronic device obtains, by using a radar, a third distance between the robot and the detected object under the robot by using the radar; and when determining, based on the target distance and the third distance, that the first condition is met, determines that the robot is located in the edge region of the target object, and controls the robot to change a moving direction.

In the implementation, when the robot executes the task, whether the robot is located in the edge region of the target object can be detected in real time, and when it is determined that the robot is located in the edge region of the target object, the robot is controlled to change the moving direction in time, to prevent the robot from falling from the target object when the robot executes the task, and improve continuity of a task execution process of the robot. In other words, this prevents the user from wasting time in the task execution process of the robot, and improves user viscosity of the solution.

According to a second aspect, which is not covered by the invention, an embodiment of this application provides an edge region detection method, and the method may be used in the field of intelligent robots in the field of artificial intelligence. The method includes: An electronic device obtains at least one first distance, and selects a maximum distance from the at least one first distance as a target distance, where the first distance is a distance between a robot and a detected object under the robot before the robot moves; obtains a second distance, where the second distance is a distance between the robot and the detected object under the robot when the robot moves; and when determining, based on the target distance and the second distance, that a first condition is met, determines that the robot is located in an edge region of a target object, where the target object is an object related to a task executed by the robot, a probability that the robot falls from the edge region of the target object is greater than a probability that the robot falls from a non-edge region of the target object, and the first condition indicates that a difference between the second distance and the target distance is greater than a first threshold.

In a possible implementation of the second aspect, before the electronic device obtains the second distance between the robot and the detected object under the robot when the robot moves, the method further includes: The electronic device collects first point cloud data of an environment in a target range of the robot by using a radar, where the environment in the target range includes an environment in front of the robot in a current detection range of the radar; and when determining, based on the first point cloud data, that a boundary of the target object exists in a surrounding environment in the target range of the robot, controls the robot to move towards the boundary of the target object. The method further includes: When a distance between the robot and the boundary of the target object is less than the first threshold, and the robot is not located in the edge region of the target object, the electronic device determines the boundary of the target object as a baseline, where the baseline is used to assist the robot in positioning when the robot executes the task.

In the second aspect in this embodiment of this application, the electronic device may further perform steps performed by the electronic device in the possible implementations of the first aspect. For the second aspect in this embodiment of this application, specific implementation steps of the second aspect and the possible implementations of the second aspect of this application, and beneficial effect brought by each possible implementation, refer to descriptions in the possible implementations of the first aspect. Details are not described herein again.

According to a third aspect, an embodiment of this application provides a position correction apparatus, and the apparatus may be used in the field of intelligent robots in the field of artificial intelligence. The position correction apparatus includes: an obtaining module, configured to obtain a first actual distance between a robot and a baseline in a target direction and a first course angle of the robot relative to the baseline, where the baseline is a boundary of a target object, the target direction is a direction perpendicular to the baseline, and the first course angle is an included angle between a moving direction of the robot and the baseline; and a control module, configured to control the robot to move based on an expected distance between the robot and the baseline in the target direction, the first actual distance, and the first course angle, so that a second actual distance between the moved robot and the baseline in the target direction is the expected distance.

In the third aspect in this embodiment of this application, the position correction apparatus may further perform steps performed by the electronic device in the possible implementations of the first aspect. For the third aspect in this embodiment of this application, specific implementation steps of the third aspect and the possible implementations of the third aspect of this application, and beneficial effect brought by each possible implementation, refer to descriptions in the possible implementations of the first aspect. Details are not described herein again.

According to a fourth aspect, which is not covered by the invention, an embodiment of this application provides an edge region detection apparatus. The edge region detection apparatus includes: an obtaining module, configured to: obtain at least one first distance, and select a maximum distance from the at least one first distance as a target distance, where the first distance is a distance between a robot and a detected object under the robot before the robot moves; and obtain a second distance, where the second distance is a distance between the robot and the detected object under the robot when the robot moves; and a determining module, configured to: when determining, based on the target distance and the second distance, that a first condition is met, determine that the robot is located in an edge region of a target object, where a probability that the robot falls from the edge region of the target object is greater than a probability that the robot falls from a non-edge region of the target object, and the first condition indicates that a difference between the second distance and the target distance is greater than a first threshold.

In the fourth aspect in this embodiment of this application, which is not covered by the invention, vthe edge region detection apparatus may further perform steps performed by the electronic device in the possible implementations of the second aspect. For the fourth aspect in this embodiment of this application, specific implementation steps of the fourth aspect and the possible implementations of the fourth aspect of this application, and beneficial effect brought by each possible implementation, refer to descriptions in the possible implementations of the second aspect. Details are not described herein again.

According to a fifth aspect, an embodiment of this application provides an electronic device. The electronic device may include a processor. The processor is coupled to a memory. The memory stores program instructions, and when the program instructions stored in the memory are executed by the processor, steps performed by the electronic device in the first aspect or steps performed by the electronic device in the second aspect are implemented.

According to a sixth aspect, an embodiment of this application provides a computer-readable storage medium. The computer-readable storage medium stores a computer program, and when the computer program is run on a computer, the computer is enabled to perform the position correction method in the first aspect or the edge region detection method in the second aspect.

According to a seventh aspect, an embodiment of this application provides a circuit system. The circuit system includes a processing circuit, and the processing circuit is configured to perform steps performed by the electronic device in the first aspect or steps performed by the electronic device in the second aspect.

According to an eighth aspect, an embodiment of this application provides a computer program. When the computer program is run on a computer, the computer is enabled to perform steps performed by the electronic device in the first aspect or steps performed by the electronic device in the second aspect.

According to a ninth aspect, an embodiment of this application provides a chip system. The chip system includes a processor, configured to implement functions in the foregoing aspects, for example, sending or processing data and/or information in the foregoing method. In a possible design, the chip system further includes a memory. The memory is configured to store program instructions and data that are necessary for a server or a communication device. The chip system may include a chip, or may include a chip and another discrete component.

## BRIEF DESCRIPTION OF DRAWINGS

FIG. 1 is a schematic diagram of a structure of a robot according to an embodiment of this application;

FIG. 2A and FIG. 2B are a flowchart of a robot position correction method according to an embodiment of this application;

FIG. 3 shows two schematic diagrams of change curves of echo data corresponding to a detected object under a robot in a robot position correction method according to an embodiment of this application;

FIG. 4 is a schematic diagram of a first target range in a robot position correction method according to an embodiment of this application;

FIG. 5 shows two schematic diagrams of second point cloud data in a robot position correction method according to an embodiment of this application;

FIG. 6 is another schematic diagram of a change curve of echo data corresponding to a detected object under a robot in a robot position correction method according to an embodiment of this application;

FIG. 7 is a schematic diagram of determining a baseline in a robot position correction method according to an embodiment of this application;

FIG. 8 is another schematic diagram of determining a baseline in a robot position correction method according to an embodiment of this application;

FIG. 9 is a schematic diagram of a detection point of a radar in a robot position correction method according to an embodiment of this application;

FIG. 10 is a schematic diagram of a first actual distance and a first course angle in a robot position correction method according to an embodiment of this application;

FIG. 11 is a schematic diagram of an expected distance, a first actual distance, and a first course angle in a robot position correction method according to an embodiment of this application;

FIG. 12 is a schematic diagram of a structure of a position correction apparatus according to an embodiment of this application;

FIG. 13 is a schematic diagram of another structure of a position correction apparatus according to an embodiment of this application;

FIG. 14 is a schematic diagram of a structure of an edge region detection apparatus;

FIG. 15 is a schematic diagram of another structure of an edge region detection apparatus; and

FIG. 16 is a schematic diagram of a structure of an electronic device according to an embodiment of this application.

## DESCRIPTION OF EMBODIMENTS

In the specification, claims, and the accompanying drawings of this application, terms "first", "second", and the like are intended to distinguish similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include", "contain" and any other variants mean to cover the non-exclusive inclusion, so that a process, method, system, product, or device that includes a series of units is not limited to those units, but may include other units not expressly listed or inherent to such a process, method, system, product, or device.

The solution provided in embodiments of this application may be applied to a robot. For example, when the robot removes mites on a quilt on a bed, and in particular, when the robot removes mites on a mattress covered by the quilt, the robot easily falls into household items due to gravity, and the robot, covered by the quilt, cannot collect information about a surrounding environment. Consequently, a position of the robot cannot be located through comparison between the information about the surrounding environment and an environment of an entire target object, and the position of the robot cannot be corrected. For another example, the robot cleans a floor of a toy room. However, because a plurality of toys are scattered in the toy room, the scattered toys hinder the robot from collecting a surrounding environment, and a position of the robot cannot be corrected. Examples of all application scenarios of the solution are not enumerated herein. In the foregoing scenarios, a new positioning manner needs to be used to locate the robot, to correct the position of the robot.

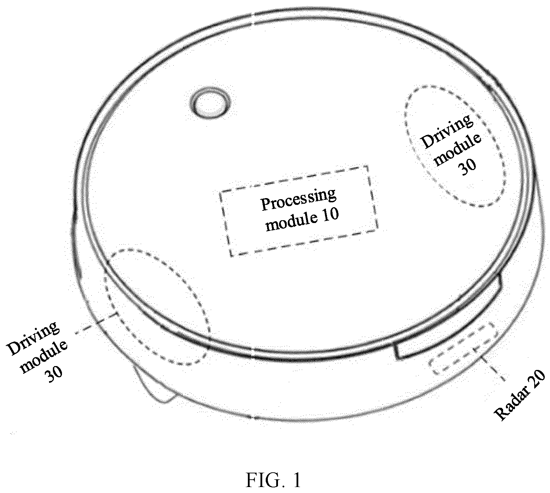

Before a robot position correction method provided in embodiments of this application is described in detail, refer to FIG. 1. FIG. 1 is a schematic diagram of a structure of a robot according to an embodiment of this application. A robot 1 includes a processing module 10, a radar 20, and a driving module 30. The processing module 10 may specifically be represented as a processing chip. Further, the processing chip may specifically be represented as a chip such as a central processing unit (central processing unit, CPU), an application-specific integrated circuit (application-specific integrated circuit, ASIC), a field programmable gate array (field programmable gate array, FPGA), a neural network processing unit (neural network processing unit, NPU), or a graphics processing unit (graphics processing unit, GPU).

The radar 20 is configured to emit an electromagnetic wave. A frequency band of the electromagnetic wave includes but is not limited to 24 G, 77 G, 60 G, 5 G, 2.4 G, or another frequency band. This is not limited herein. The driving module 30 is configured to control the robot to rotate in situ or move according to an instruction sent by the processing module 10. The driving module 30 may use a power drive technology. For example, the driving module 30 may use a stepper motor or a servo motor. Alternatively, the driving module 30 may use a hydraulic drive technology, a pneumatic drive technology, or another drive technology. This is not limited herein.

Specifically, the processing module 10 may obtain relative position information between a baseline and the robot 1 by using the radar 20, that is, obtain an actual distance between the robot 1 and the baseline in a target direction, and an actual course angle of the robot 1 relative to the baseline. The processing module 10 may further send an instruction to the driving module 30, to control the robot to move based on an expected distance between the robot and the baseline in the target direction, a first actual distance, and a first course angle, so that a second actual distance between the moved robot and the baseline in the target direction is the expected distance. A relative positioning technology is used to correct a position of the robot based on the baseline, and a solution in which the robot automatically corrects a position in a moving process is provided.

It should be understood that FIG. 1 is merely an example of a hardware structure of the robot for ease of understanding. In an actual application product, the robot may alternatively be represented in another form. This is not limited herein.

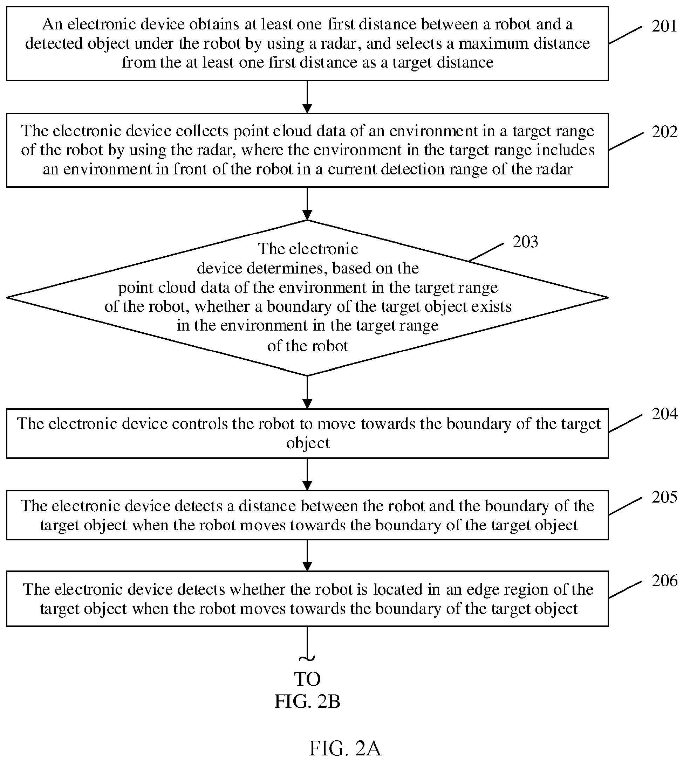

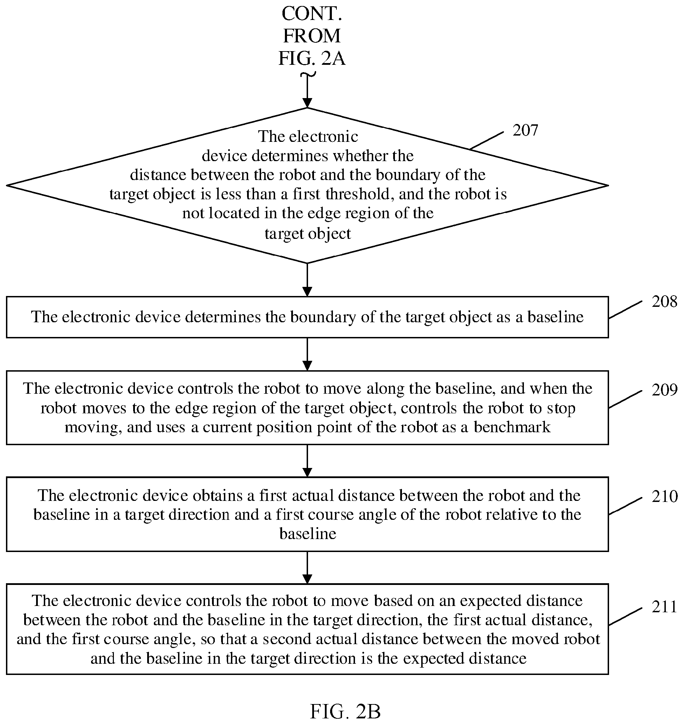

Based on the foregoing descriptions, the following describes in detail the robot position correction method provided in embodiments of this application. FIG. 2A and FIG. 2B are a schematic flowchart of a robot position correction method according to an embodiment of this application. The method may include the following steps.

201: An electronic device obtains at least one first distance between a robot and a detected object under the robot by using a radar, and selects a maximum distance from the at least one first distance as a target distance.

In some embodiments of this application, after the electronic device is placed on a target object, the electronic device may obtain the at least one first distance between the robot and the detected object under the robot by using the radar, and select the maximum distance from the at least one first distance as the target distance. The electronic device may be represented as the robot, or may be represented as a processor in the robot.

Specifically, the electronic device may drive, by using the driving module of the robot, the robot to move slightly, to enable the radar, integrated in the robot, to move slightly, so as to enable a detection function of the radar. Slight moving of the robot includes but is not limited to movement in a small range such as moving back and forth slightly, moving left and right slightly, and rotating in situ, or another manner. Examples are not enumerated herein. It should be noted that a process in which the robot moves slightly is not considered as a moving process of the robot. The electronic device may perform a detection operation by using one or more radars dedicated to detecting a distance of the detected object under the robot. Alternatively, the electronic device may perform a detection operation by using one or more first detection antennas of the radar, where the first detection antenna is an antenna, of at least two antennas included in the radar, that is dedicated to detecting a distance of the detected object under the robot. The electronic device detects, by using the radar dedicated to detecting the distance of the detected object under the robot or the first detection antenna, a reflected signal returned by the detected object under the robot, and obtains echo data corresponding to the reflected signal, to generate a change curve corresponding to the echo data. Further, the electronic device obtains the at least one first distance between the robot and the detected object under the robot, and may further select the maximum distance as the target distance.

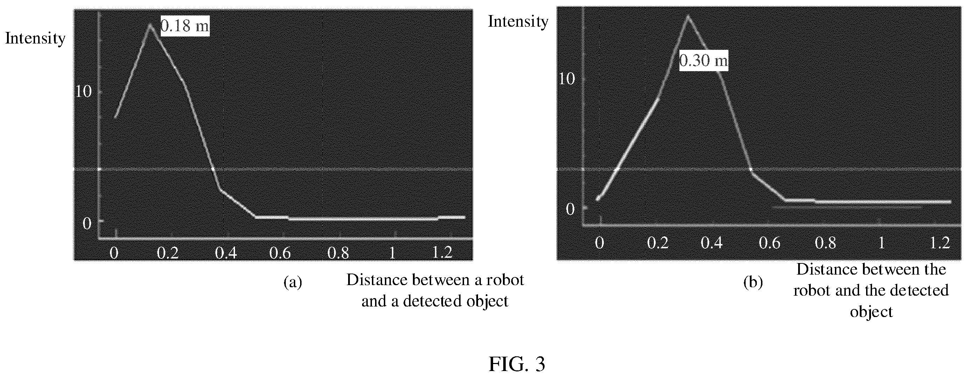

To more intuitively understand the solution, FIG. 3 shows two schematic diagrams of change curves of the echo data corresponding to the detected object under the robot in the robot position correction method according to an embodiment of this application. FIG. 3 includes two sub-schematic diagrams: (a) and (b). In the sub-schematic diagram (a) in FIG. 3, an example in which the robot sterilizes bedding (namely, an example of the target object) on a spring mattress is used. In the sub-schematic diagram (b) in FIG. 3, an example in which the robot sterilizes bedding (namely, another example of the target object) on a wooden bed is used. In the sub-schematic diagram (a) and the sub-schematic diagram (b) in FIG. 3, a vertical coordinate indicates intensity of the echo data generated by the detected object under the robot, a horizontal coordinate indicates the distance between the robot and the detected object under the robot, and a distance corresponding to a peak in the change curve corresponding to the echo data indicates the distance between the robot and the detected object under the robot. The sub-schematic diagram (a) in FIG. 3 indicates that a distance between the robot and the spring mattress is 0.18 meters, and the sub-schematic diagram (b) in FIG. 3 indicates that a distance between the robot and the wooden bed is 0.3 meters. It can be learned from comparison between the sub-schematic diagram (a) and the sub-schematic diagram (b) in FIG. 3 that because bedding such as mattresses and quilts on beds of different users has different thickness, first distances corresponding to different beds may be different, and target distances corresponding to different users are different. It should be understood that examples in FIG. 3 are merely for ease of understanding the solution, and are not intended to limit the solution.

202: The electronic device collects point cloud data of an environment in a target range of the robot by using the radar, where the environment in the target range includes an environment in front of the robot in a current detection range of the radar.

In some embodiments of this application, if the electronic device is initially placed at any position on the target object, an initial orientation (which may also be referred to as a first direction for ease of distinguishing from the following descriptions) of the robot may be initialized to 0°, and the initial orientation of the robot is a current orientation of wheels of the robot. A first radar is used to collect first point cloud data of an environment in a first target range of the robot. The environment in the first target range includes an environment in front of the robot in a current detection range of the radar. Further, a current orientation of the robot is used as a centerline, and the environment in the first target range may include an environment in front of the robot in a range of a first angle about the centerline. In other words, a current detection range of a first radar is the range of the first angle about the centerline, and the range of the first angle may be 30 degrees, 50 degrees, 60 degrees, 80 degrees, or another value. Examples are not enumerated herein. The first point cloud data is a type of point cloud data. The point cloud data may be referred to as a point cloud (point cloud) for short, and is a set of points that indicate spatial distribution of an object and a surface feature of the object in a same spatial reference system. After spatial coordinates of each sampling point on a surface of an object in the environment in the target range are obtained, a set of points is obtained, and is referred to as a point cloud.

Specifically, the electronic device drives, by using the driving module of the robot, the robot to move slightly; detects a reflected signal generated by the environment in the first target range, to obtain echo data corresponding to the environment in the first target range; performs two-dimensional fast Fourier transform (2D-FFT) on echo data of each frame included in the echo data; performs constant false alarm rate (constant false alarm rate, CFAR) detection on obtained spectral information; and generates the first point cloud data of the environment in the first target range of the robot by using an angle estimation algorithm.

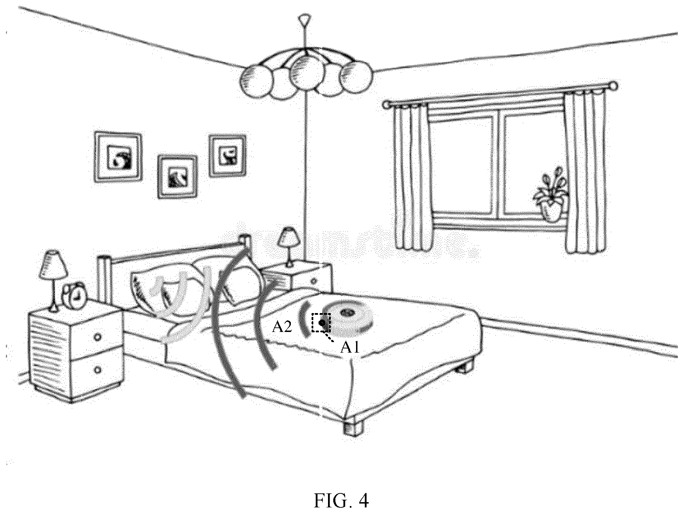

To more intuitively understand the solution, FIG. 4 is a schematic diagram of the first target range in the robot position correction method according to an embodiment of this application. In FIG. 4, A1 indicates a radar of the robot, and a region (namely, a region of an emitted waveform in front of A1 in FIG. 4) pointed by A2 indicates the first target range. It should be understood that the example in FIG. 4 is merely used to facilitate understanding of the solution, and is not intended to limit the solution.

If step 203 or step 207 is performed before step 202, in an implementation, the electronic device controls an orientation of the robot to change to a second orientation, where the second orientation is obtained by rotating the initial orientation by one or more first angles to the left/right. The electronic device collects, by using the radar, third point cloud data of an environment in a second target range corresponding to the rotated robot. The first angle may be 20 degrees, 30 degrees, 45 degrees, 50 degrees, or another value, provided that a value of the first angle is less than a value of a range of the first angle. Examples are not enumerated herein. Further, the current orientation of the rotated robot is used as a centerline, and the environment in the second target range may include an environment in front of the robot in the range of the first angle about the current orientation of the rotated robot.

In another implementation, the robot may be integrated with a plurality of radars or a plurality of detection antennas in different directions. Then, the electronic device may not rotate the robot, but directly collect the third point cloud data of the environment in the second target range by using a second radar or a second detection antenna. The second radar and the first radar are radars arranged in different directions, and the second detection antenna and the first detection antenna are detection antennas arranged in different directions.

It should be noted that an execution sequence of step 201 and step 202 is not limited in this embodiment of this application. The electronic device may simultaneously perform step 201 and step 202. Specifically, in one case, the electronic device may be configured with a radar dedicated to obtaining the distance between the robot and the detected object under the robot, and a radar dedicated to detecting an environment in front of the robot. Then, the electronic device may separately perform step 201 and step 202 by using different radars. In another case, the electronic device may be configured with a detection antenna dedicated to obtaining the distance between the robot and the detected object under the robot, and a detection antenna dedicated to detecting an environment in front of the robot. Then, the electronic device may separately perform step 201 and step 202 by using different detection antennas. Alternatively, the electronic device may first perform step 201, and then perform step 202. Alternatively, the electronic device may first perform step 202, and then perform step 201.

203: The electronic device determines, based on the point cloud data of the environment in the target range of the robot, whether a boundary of the target object exists in the environment in the target range of the robot; and if the boundary exists, performs step 204, or if the boundary does not exist, performs step 202 again.

In some embodiments of this application, after obtaining the first point cloud data or the third point cloud data in step 202, the electronic device determines, based on the first point cloud data or the third point cloud data, whether the boundary of the target object exists in the environment in the target range of the robot; and if the boundary exists, performs step 204, or if the boundary does not exist, performs step 202 again, to continue to obtain information about a surrounding environment of the robot, where the target object is an object related to a task executed by the robot.

Specifically, in an implementation, the electronic device may prestore one or more pieces of second point cloud data. Each piece of second point cloud data indicates point cloud data, of a line of an object, that is collected by the radar, and relative angles between lines corresponding to different second point cloud data and the radar may be different. That the electronic device determines whether a boundary of the target object exists in the environment in the target range of the robot may include: The electronic device obtains a first similarity between the first point cloud data/third point cloud data obtained in step 202 and each of at least one piece of second point cloud data; determines whether each first similarity is greater than or equal to a preset similarity threshold; and if target point cloud data exists in the at least one piece of second point cloud data, determines that the boundary of the target object exists in the surrounding environment in the target range of the robot. A similarity between the target point cloud data and the first point cloud data is greater than or equal to the preset similarity threshold. The preset similarity threshold may be 80 percent, 85 percent, 90 percent, 95 percent, or another value. This is not limited herein.

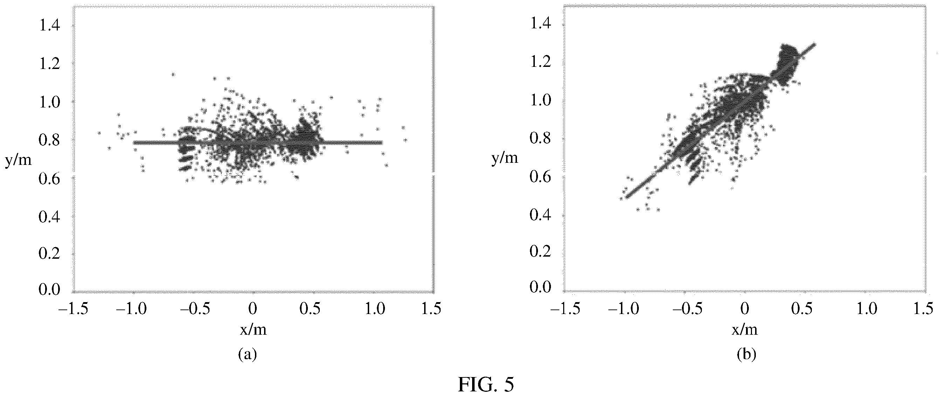

To more intuitively understand the solution, FIG. 5 show two schematic diagrams of the second point cloud data in the robot position correction method according to an embodiment of this application. FIG. 5 includes two sub-schematic diagrams: (a) and (b). The sub-schematic diagram (a) in FIG. 5 indicates point cloud data, of the boundary of the target object, that is collected when the boundary of the target object is located on a front side of the radar, and the sub-schematic diagram (b) in FIG. 5 indicates point cloud data, of the boundary of the target object, that is collected when the boundary of the target object is located on a left front side of the radar. It should be understood that the example in FIG. 5 is for ease of understanding the solution, and is not intended to limit the solution.

In an implementation, the electronic device performs a filtering operation and a fitting operation on the first point cloud data/third point cloud data obtained in step 202, and if a fitting result of the first point cloud data/third point cloud data is a linear function and a fitting error of the linear function is less than a preset error threshold, determines that the boundary of the target object exists in the surrounding environment in the target range of the robot. The fitting error indicates an aggregation degree of the first point cloud data relative to the linear function obtained through fitting. A larger aggregation degree of the first point cloud data relative to the linear function obtained through fitting indicates a smaller fitting error and a better fitting degree. A smaller aggregation degree of the first point cloud data relative to the linear function obtained through fitting indicates a larger the fitting error and a worse the fitting degree. For example, a value of the preset error threshold may be 0.5, 1.0, or another value. This is not limited herein.

Specifically, after performing the filtering operation and the fitting operation on the first point cloud data/third point cloud data obtained in step 202, to obtain the first linear function, the electronic device may calculate a distance between the first linear function and each of a plurality of points included in the first point cloud data/third point cloud data; and calculate an average value of distances between the first linear function and all points included in the first point cloud data/third point cloud data; or calculate a maximum value of a plurality of distances between the first linear function and the plurality of points included in the first point cloud data/third point cloud data; or calculate a minimum value of a plurality of distances between the first linear function and the plurality of points included in the first point cloud data/third point cloud data.

In this embodiment of this application, two manners of determining, based on the first point cloud data, whether the boundary of the target object exists in the surrounding environment in the target range of the robot are provided. This improves implementation flexibility of the solution.

204: The electronic device controls the robot to move towards the boundary of the target object.

In some embodiments of this application, after determining that the boundary of the target object exists in the environment in the target range of the robot, the electronic device controls, based on position information of the boundary of the target object, the robot to move towards the boundary of the target object. The position information of the boundary of the target object may include a relative angle and a relative distance between the boundary of the target object and a current position of the robot. The relative distance between the boundary of the target object and the current position of the robot is a distance between the robot and the boundary of the target object in the target direction, and the target direction is a direction perpendicular to the boundary of the target object.

Specifically, the electronic device may control, based on the relative angle between the boundary of the target object and the current position of the robot, an orientation of the robot to rotate to be perpendicular to the boundary of the target object, and control, based on the relative distance between the boundary of the target object and the current position of the robot, the robot to move towards the boundary of the target object in the direction.

205: The electronic device detects a distance between the robot and the boundary of the target object when the robot moves towards the boundary of the target object.

In some embodiments of this application, the electronic device detects in real time a distance between the robot and the boundary of the target object when the robot moves towards the boundary of the target object. Specifically, when the robot moves towards the boundary of the target object, the electronic device may obtain, by using the radar, point cloud data corresponding to the boundary of the target object in real time, and generate the relative distance between the robot and the boundary of the target object in the target direction based on the point cloud data corresponding to the boundary of the target object.

206: The electronic device detects whether the robot is located in the edge region of the target object when the robot moves towards the boundary of the target object.

In some embodiments of this application, the electronic device detects in real time whether the robot is located in the edge region of the target object when the robot moves towards the boundary of the target object. The target object may specifically be a bed, a floor, a blanket, grass, or another object on which the robot can work. Examples are not enumerated herein. The edge region of the target object may also be referred to as a dangerous region of the target object, a cliff region of the target object, or another name. A probability that the robot falls from the edge region of the target object is greater than a probability that the robot falls from a non-edge region of the target object, that is, when the robot moves in the edge region of the target object, the robot is likely to fall from the target object. It should be noted that two concepts of "a probability that the robot falls from the edge region of the target object" and "a probability that the robot falls from a non-edge region of the target object" are merely for ease of understanding the edge region of the target object. In an actual situation, the robot does not need to calculate "a probability that the robot falls from the target object" to distinguish the edge region and the non-edge region of the target object. In addition, the edge region of the target object is not a region with a fixed area, that is, the robot does not divide an edge region and a non-edge region of the target object, but determines edge regions and non-edge regions of the specific target object based on the detection result.

Specifically, step 201 is an optional step. In an implementation, if step 201 is performed, step 206 may include: When the robot moves towards the boundary of the target object, the electronic device obtains a second distance between the robot and the detected object under the robot by using the radar in real time; and when determining, based on the target distance and the second distance, that a first condition is met, determines that the robot is located in the edge region of the target object, where the first condition indicates that a difference between the second distance and the target distance is greater than or equal to a second threshold. A value of the second threshold may be 20 centimeters, 30 centimeters, 35 centimeters, or another value. This is not limited herein.

More specifically, in a case, the electronic device adds the target distance and the second threshold, to obtain a third threshold; obtains, by using the radar, echo data corresponding to the detected object under the robot in real time, to generate a change curve corresponding to the echo data; further obtains the second distance between the robot and the detected object under the robot in real time; determines whether the second distance is greater than or equal to the third threshold; and if the second distance is greater than or equal to the third threshold, determines that the robot is located in the edge region of the target object; or if the second distance is less than the third threshold, determines that the robot is not located in the edge region of the target object, and continues to obtain a distance between the robot and the detected object under the robot. It should be noted that, for a specific implementation in which the electronic device obtains, by using the radar, the echo data corresponding to the detected object under the robot in real time, refer to descriptions in step 201. Details are not described herein again.

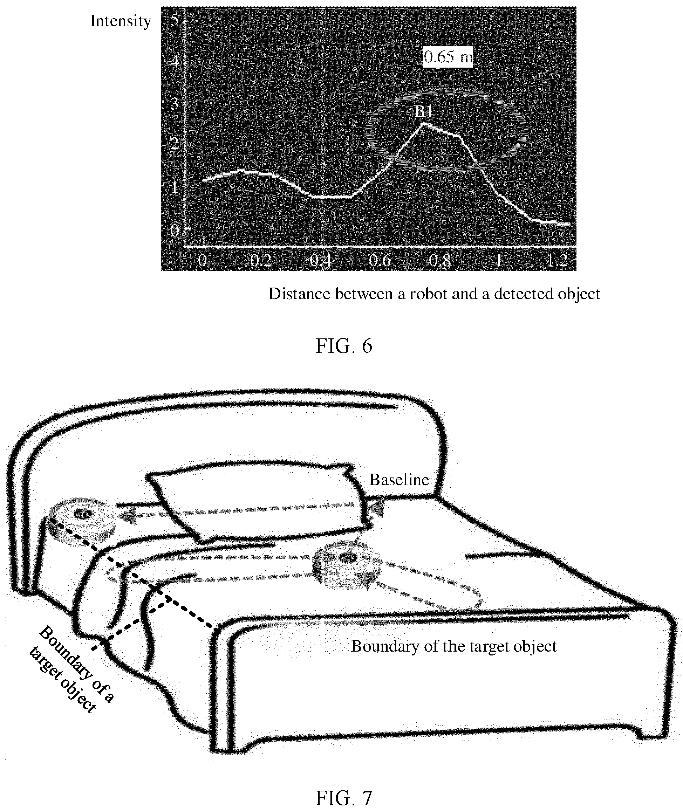

To more intuitively understand the solution, FIG. 6 shows another schematic diagrams of a change curve of the echo data corresponding to the detected object under the robot in the robot position correction method according to an embodiment of this application. In FIG. 6, an example in which the robot removes mites from bedding (namely, an example of the target object) on a spring mattress is used. FIG. 6 needs to be understood with reference to the sub-schematic diagram (a) in FIG. 3. An example in which a value of the target distance corresponding to the sub-schematic diagram (a) in FIG. 3 is 0.18 meters is used, that is, a maximum distance between the robot and the spring mattress is 0.18 meters. B1 in FIG. 6 (namely, a point at which intensity of the echo data is highest) indicates that the distance between the robot and the detected object under the robot that is obtained by the electronic device by using the radar reaches 0.8 meters, and a difference between 0.8 meters and 0.18 meters is greater than the second threshold. Therefore, when the robot moves to the position point indicated by B1, the robot is located in the edge region of the target object. It should be understood that the example in FIG. 6 is merely used for ease of understanding the solution, and is not intended to limit the solution.

In another case, the electronic device obtains, by using the radar, the second distance between the robot and the detected object under the robot in real time; calculates a difference between the second distance and the target distance;

determines whether the difference between the second distance and the target distance is greater than or equal to the second threshold; and if the difference is greater than or equal to the second threshold, determines that the robot is located in the edge region of the target object; or if the difference is less than the second threshold, determines that the robot is not located in the edge region of the target object, and continues to obtain the distance between the robot and the detected object under the robot.

In this embodiment of this application, the electronic device obtains the distance between the robot and the detected object under the robot in real time by using the radar, and the electromagnetic wave emitted by the radar can penetrate the cotton object or the silk object. Therefore, when the robot is not located in the edge region of the target object, the radar detects a distance between the robot and a bed plate/spring mattress. When the robot is located in the edge region of the target object, the radar detects a distance between the robot and a floor. The distance between the robot and the floor is much greater than the distance between the robot and the bed plate/spring mattress, and the solution implements detection of the edge region of the target object according to the principle. The target distance is a maximum value obtained from at least one distance between the robot and the bed plate/spring mattress. Because heights of cotton objects placed on target objects of different users are different, a uniform target distance cannot be set. Based on the manner, provided in the solution, in which the electronic device automatically detects a distance by using the radar and generates the target distance, accuracy of determining an edge region by the robot can be improved, to prevent the robot from falling from the target object. In addition, the electromagnetic wave emitted by the radar can penetrate the cotton object. Therefore, if a size of a cotton object or a silk object such as a quilt/cotton mattress on a bed is greater than a size of a bed plate, it may be determined, according to the solution, that the robot is in an edge region when the robot is located in an edge of the bed, so that the robot stops moving in time. Because the cotton object usually cannot support the robot, that is, cannot prevent the robot from falling, when the robot is located at an edge of the bed, the robot can stop moving in time, to prevent the robot from falling from the target object. This further prevents the user from wasting time on replacing the fallen robot on the target object, and ensures continuity of the moving process of the robot.

In another implementation, if step 201 is not performed, a preset distance threshold may further be configured in the electronic device, and the preset distance threshold is a fixed distance. When the robot moves towards the boundary of the target object, the electronic device obtains the second distance between the robot and the detected object under the robot by using the radar in real time; determines whether the second distance is greater than or equal to the preset distance threshold; and if the second distance is greater than or equal to the preset distance threshold, determines that the robot is located in the edge region of the target object; or if the second distance is less than the preset distance threshold, determines that the robot is not located in the edge region of the target object.

It should be noted that an execution sequence of step 204 and step 205 is not limited in this embodiment of this application. The electronic device may simultaneously perform step 204 and step 205. Specifically, in one case, the electronic device may be configured with a radar dedicated to obtaining the distance between the robot and the detected object under the robot, and a radar dedicated to detecting an environment in front of the robot. Then, the electronic device may separately perform step 204 and step 205 by using different radars. In another case, the electronic device may be configured with a detection antenna dedicated to obtaining the distance between the robot and the detected object under the robot, and a detection antenna dedicated to detecting an environment in front of the robot. Then, the electronic device may separately perform step 204 and step 205 by using different detection antennas.

In another implementation, step 205 may further include: The electronic device collects data of the surrounding environment of the robot in real time by using an infrared sensor or another type of sensor, and determines, based on the data of the surrounding environment of the robot, whether the robot is located in the edge region of the target object. Specific implementations in which the electronic device detects whether the robot is located in the edge region of the target object are not enumerated herein.

207: The electronic device determines whether the distance between the robot and the boundary of the target object is less than the first threshold, and the robot is not located in the edge region of the target object. If the distance between the robot and the boundary of the target object is less than the first threshold, and the robot is not located in the edge region of the target object, step 208 is performed. If the distance between the robot and the boundary of the target object is greater than the first threshold, and the robot is located in the edge region of the target object, step 202 is performed again.

In some embodiments of this application, the electronic device determines whether the distance between the robot and the boundary of the target object is less than the first threshold, and the robot is not located in the edge region of the target object. If the distance between the robot and the boundary of the target object is less than the first threshold, and the robot is not located in the edge region of the target object, step 208 is performed. A value of the first threshold may be 5 centimeters, 10 centimeters, 12 centimeters, 15 centimeters, or another value. This is not limited herein.

If the distance between the robot and the boundary of the target object is greater than the first threshold, and the robot is located in the edge region of the target object, the electronic device determines that the boundary of the target object is not a baseline, and may drive the robot to rotate by 180 degrees (that is, complete a U-turn), to control the robot to move to an initial position (namely, a position at which the robot is placed on the target object) of the robot. Then, step 202 is performed again, to detect a boundary of a next target object from the surrounding environment of the robot, and further determine whether the boundary of the next target object is the baseline. If the distance between the robot and the boundary of the target object is greater than the first threshold, and the robot is not located in the edge region of the target object, step 204 and step 205 continue to be performed until the distance between the robot and the boundary of the target object is less than the first threshold, or the robot is located in the edge region of the target object.

208: The electronic device determines the boundary of the target object as the baseline.

In some embodiments of this application, when the distance between the robot and the boundary of the target object is less than the first threshold, and the robot is not located in the edge region of the target object, the electronic device determines the boundary of the target object as the baseline.

To more intuitively understand the solution, FIG. 7 is a schematic diagram of determining the baseline in the robot position correction method according to an embodiment of this application. In FIG. 7, for example, after the electronic device performs step 201 to step 207 for three times, the baseline is determined. As shown in FIG. 7, the electronic device first detects a boundary (namely, one boundary of the target object) of a foot of a bed by using the radar, and controls the robot to move to the boundary of the foot of the bed. However, when a distance between the robot and the boundary of the foot of the bed is less than the first threshold, the robot is located in an edge region of the bed. In this way, the electronic device controls the robot to return to an initial position; controls the robot to rotate by 120 degrees to the right; detects a boundary (namely, one boundary of the target object) on a left side of the bed by using the radar; and controls the robot to move to the boundary on the left side of the bed. However, when a distance between the robot and the boundary on the left side of the bed is less than the first threshold, the robot is located in the edge region of the bed. In this way, the electronic device controls the robot to return to the initial position again; controls the robot to rotate by 120 degrees to the right; detects a boundary (namely, one boundary of the target object) of a head of the bed by using the radar; and controls the robot to move to the boundary of the head of the bed. However, when a distance between the robot and the boundary of the head of the bed is less than the first threshold, the robot is not located in the edge region of the bed. In this way, the electronic device determines the boundary of the head of the bed as the baseline, and controls the robot to move along the baseline. It should be understood that the example in FIG. 7 is merely for ease of understanding the solution, and is not intended to limit the solution.

In this embodiment of this application, the solution in which the robot automatically determines the baseline is provided. Therefore, regardless of a position, of the target object, at which a user places the robot, the robot can find the baseline, and correct the position of the robot based on the baseline in a cleaning process. In addition, the baseline is not any detected line (namely, any boundary of the target object). Only when the distance between the robot and the boundary of the target object is less than the first threshold, and the robot is not located in the edge region, the boundary of the target object is determined as the baseline. In other words, the baseline is one boundary of the target object, and is not located in the edge region of the target object. This prevents the robot from falling from the target object in a process of searching for the baseline.

209: The electronic device controls the robot to move along the baseline, and when the robot moves to the edge region of the target object, controls the robot to stop moving, and uses a current position point of the robot as a benchmark.

In some embodiments of this application, when the electronic device is located at the baseline, the electronic device may further control the robot to move along the baseline, and when the robot moves along the baseline, detect in real time whether the robot moves to the edge region of the target object. When detecting that the robot is located in the edge region of the target object, the electronic device controls the robot to stop moving and to rotate in situ by 180 degrees; and uses a current position point of the robot as a benchmark, uses a current orientation of the robot as a 0-degree orientation, and uses the benchmark as a start point at which the robot executes the task. The task may be mite removal, vacuuming, dehumidification, clothing ironing, mowing, bacterial sample collection, or another type of task. This is not limited herein.

In this embodiment of this application, because the baseline is a boundary of the target object, the benchmark is located in the edge region of the boundary, that is, the benchmark is a vertex of the target object, and the vertex of the target object is used as the start point at which the robot performs the task. Therefore, it is easier to plan a moving path of the robot, and a task execution path without repetition can be planned, so that the task execution path of the robot is more organized. This helps improve efficiency of a task execution process of the robot, and reduce task execution duration of the robot.

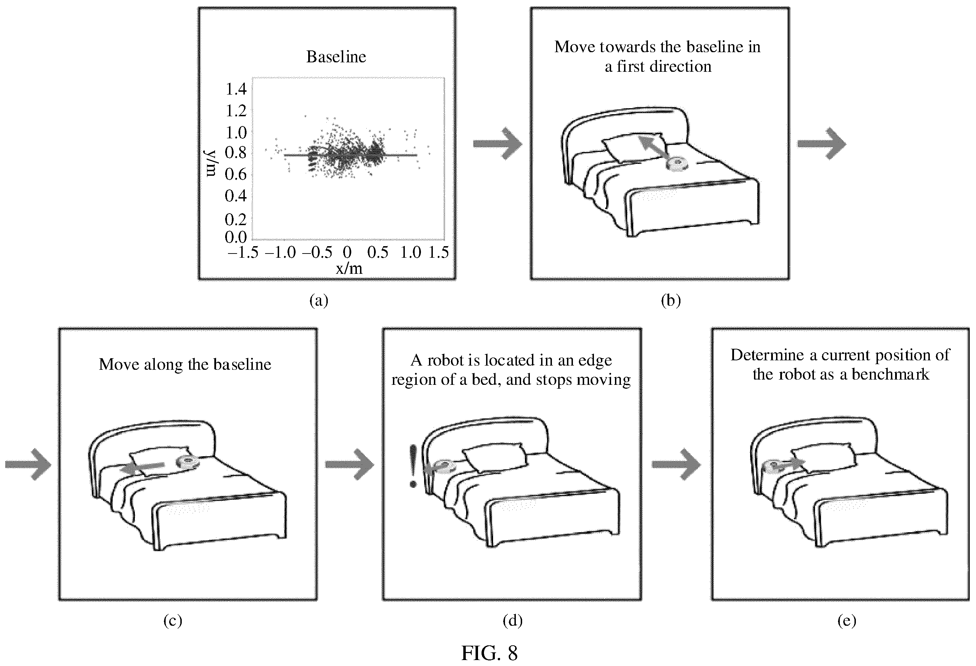

To more intuitively understand the solution, FIG. 8 is a schematic diagram of determining the baseline in the robot position correction method according to an embodiment of this application. FIG. 8 includes five sub-schematic diagrams: (a), (b), (c), (d), and (e). In the sub-schematic diagram (a) in FIG. 8, an example in which the baseline is located in front of the robot is used. The sub-schematic diagram (a) in FIG. 8 indicates a baseline obtained through fitting based on point cloud data, collected by the electronic device by using the radar, of the environment in the target range of the robot. The sub-schematic diagram (b) in FIG. 8 indicates that the electronic device controls the robot to move towards the baseline in a direction (namely, the target direction) perpendicular to the baseline. The sub-schematic diagram (c) in FIG. 8 indicates that the electronic device controls the robot to move along the baseline, and detects in real time whether the robot moves to the edge region of the target object (namely, a bed in FIG. 8). The sub-schematic diagram (d) in FIG. 8 indicates that the electronic device detects that the robot is located in the edge region of the target object, and controls the robot to stop moving in the direction. The sub-schematic diagram (e) in FIG. 8 indicates that the electronic device controls the robot to rotate by 180 degrees, uses a current position of the robot as the benchmark, and uses the benchmark as a start point at which the robot removes mites from the bed. It should be understood that the example in FIG. 8 is only for ease of understanding the solution, and is not intended to limit the solution.

It should be noted that step 209 is an optional step. If the user places the robot at a vertex of the target object each time the user places the robot on the target object, the electronic device may directly determine a current position of the robot as a start point at which the robot executes a task. In other words, step 209 does not need to be performed, and the robot may use one vertex of the target object as a start point for executing a task.

It should be noted that step 202 to step 208 are optional steps. A baseline confirmation rule may be preconfigured in the electronic device. The baseline confirmation rule instructs the electronic device to use a first detected line as the baseline. After detecting the baseline, the electronic device controls the robot to move to the baseline. Then, it can be shown in the manual of the robot that the user needs to place the robot in a direction towards the baseline during usage, and the baseline is an edge line with an obstruction in the target object. For example, a head of a bed and a side of the bed (namely, an example of the target object) intersect to form a baseline. For another example, a side of the bed is next to a wall, and the side of the bed and the wall intersect to form a baseline. Examples are not enumerated herein.

Alternatively, the user may directly place the robot on the baseline each time, so that the electronic device can obtain the baseline without measurement through step 202 to step 208. In other words, the electronic device may directly move along the baseline without performing step 202 to step 208.

After obtaining the start point at which the robot executes the task, the electronic device uses the start point for executing the task as an origin of a coordinate system, and uses the baseline as an x-axis in the coordinate system. Then, the electronic device may determine a moving path of the robot during task execution, and model positions of the robot during task execution, to complete initialization of a robot positioning process. The electronic device may prestore a planning rule of a moving path during task execution. After obtaining the baseline, the electronic device may determine, according to the planning rule, a moving path of the robot during task execution.

Optionally, when the robot executes the task, a moving path is in a zigzag pattern, and the moving path in the zigzag pattern includes a second moving direction and a third moving direction. The second moving direction is parallel to the baseline, and the third moving direction is perpendicular to the baseline. It should be noted that the electronic device expects the moving path of the robot to be in a zigzag pattern when the robot executes the task. However, there is an error between the moving path of the robot and an expected path in the moving process, and the electronic device corrects a position of the robot in the moving process. Therefore, an actual moving path of the robot is similar to but is not the same as a zigzag pattern.

In this embodiment of this application, when the robot executes the task, a vertex of the target object is used as the start point to control the robot to move in a path that is in a zigzag pattern, and the position of the robot and the course angle of the robot are corrected in time. Therefore, the moving path of the robot can fully cover the target object, and repetition of the moving path of the robot can be avoided.

To more intuitively understand the solution, the electronic device may describe a position of the robot relative to the baseline by using three dimensions: x, y, and $\theta$. Herein, an example in which a moving path of the robot during task execution is in a zigzag pattern is used. The electronic device may establish the following model for the position of the robot based on prior information (namely, the baseline in the foregoing steps):

$$\begin{cases} x_{cliff} = n_x * res * \cos(\theta) + \tau_x \\ y_{abs} = n_y * res * \sin(\theta) + i_y * d_{width} + \tau_y \\ \overline{\theta_{abs}} = \theta_{abs} - s * \frac{\pi}{2}, s \in \{-1, +1\}, \theta_{abs} \in \left\{0, -\frac{\pi}{2}, -\pi\right\} \\ \theta = \overline{\theta_{abs}} + \tau_{\theta 2} + \tau_{\theta 1} \end{cases} \quad (1)$$

$x_{cliff}$ indicates a value of a current position of the robot in an x-axis direction. When the robot reaches the edge region of the target object, the value of $x_{cliff}$ is reset to 0. $n_x$ indicates an accumulated increment of an encoder when the robot moves in the x-axis direction. When the robot reaches the edge region of the target object, the value of $n_x$ is reset to 0. res indicates a mapping relationship between a scale of the encoder and a moving distance of the robot, $\theta$ indicates an actual course angle of the robot relative to the baseline, and $\tau_x$ indicates an accumulated distance error of the robot in the x-axis direction during moving $y_{abs}$ indicates a distance between the robot and the baseline in a y-axis direction, and the y-axis direction is a direction perpendicular to the baseline. $n_y$ indicates an accumulated increment of the encoder when the robot moves in the y-axis direction. When the robot reaches the edge region of the target object, the value of $n_y$ is reset to 0. $d_{width}$ indicates an expected moving distance of the robot each time the robot moves in the y-axis direction, and 1 is added to $i_y$ each time the robot moves in the y-axis direction. $\tau_y$ indicates an accumulated distance error of the robot in the y-axis direction during moving, and needs to be corrected by using the baseline. $\overline{\theta_{abs}} = \theta_{abs} - s * \frac{\pi}{2}$ indicates that each time the robot is rotated, a rotation angle is 90 degrees when the robot moves in a path in a zigzag pattern. $\theta_{abs}$ indicates an initial course angle of the robot relative to the baseline, the initial course angle of the robot starting from the benchmark is 0 degrees, and $\overline{\theta_{abs}}$ indicates an expected course angle of the robot during task execution $\tau_{\theta 2}$ indicates a course angle offset caused by slipping of the robot during task execution. $\tau_{\theta 2}$ can be obtained through measurement by using an inertial measurement unit (inertial measurement unit, IMU) of the robot, and can be corrected by the robot. $\tau_{\theta 1}$ indicates an accumulated course angle error of the robot during task execution, and needs to be corrected based on the baseline. It should be noted that the example in Formula (1) is only for ease of understanding the solution, and is not intended to limit the solution.

It should be noted that $\tau_{\theta 1}$ is not the course angle offset caused by slipping, but is a course angle offset caused by insufficient precision of components configured in the robot. In other words, even if the robot is placed on a rough surface, that is, even if the robot does not slip, the course angle offset $\tau_{\theta 1}$ may also occur. $\tau_x$ and $\tau_y$ include both a distance error caused by slipping and a distance error caused by insufficient precision of components configured in the robot.

Further, if the moving path of the robot during task execution is in a zigzag pattern, the electronic device may predefine three types of moving manners for the robot. The first type is moving in the x-axis direction, a moving speed of the robot is a fixed speed, $\overline{\theta_{abs}} \in \{0, -\pi, \pi\}$, and the expected course angle is designed to be a course after inverse correction based on $\tau_{\theta 2}$, so that an actual moving track of the robot is straight. The second type is moving in the y-axis direction, $\overline{\theta_{abs}} \in \left\{ -\frac{\pi}{2}, \frac{\pi}{2} \right\}$, and the expected course angle is designed to be a course after inverse correction based on $\tau_{\theta 2}$. The third type is rotation in situ, and the rotation angle is 90 degrees.

Specifically, after determining the baseline and the benchmark, the electronic device uses the benchmark as a start point, controls the robot to move along the baseline when the robot executes the task, and detects, in real time by using the radar, whether the robot is located in the edge region of the target object when the robot executes the task. When determining that the robot is located in the edge region of the target object, the electronic device controls the robot to stop moving (that is, controls the robot not to move in the original direction), and controls the robot to rotate by 90 degrees (that is, change the moving direction) in a direction away from the baseline, that is, the rotated robot is perpendicular to the baseline.

After controlling the robot to rotate, the electronic device detects, by using the radar, whether the robot is located in the edge region of the target object. If the rotated robot is no longer located in the edge region of the target object, the electronic device controls the rotated robot to move in the direction perpendicular to the baseline by a preset length, and controls the robot to rotate by 90 degrees in a direction away from the baseline again, so that the robot continues to move in a direction parallel to the baseline. The electronic device controls the robot to repeatedly perform the foregoing steps until the rotated robot is still located in the edge region of the target object, and then determines that the task is completed. A value of the preset length needs to be less than or equal to a diameter of the robot, for example, 15 centimeters, 20 centimeters, 25 centimeters, or the like. This is not limited herein.

In this embodiment of this application, when the robot executes the task, whether the robot is located in the edge region of the target object can be detected in real time, and when it is determined that the robot is located in the edge region of the target object, the robot is controlled to change the moving direction in time, to prevent the robot from falling from the target object when the robot executes the task, and improve continuity of a task execution process of the robot. In other words, this prevents the user from wasting time in the task execution process of the robot, and improves user viscosity of the solution.

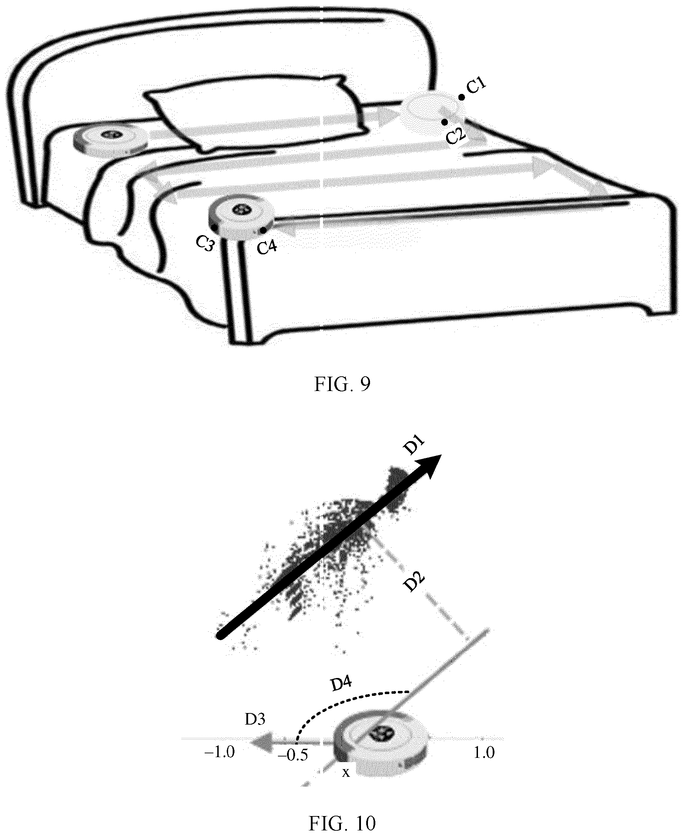

To more intuitively understand the solution, FIG. 9 is a schematic diagram of a detection point of the radar in the robot position correction method according to an embodiment of this application. In FIG. 9, for example, the moving path of the robot during task execution is in a zigzag pattern. C1 indicates a position of a configuration point (namely, the detection point) of the radar/detection antenna when the robot moves along the baseline on the head of the bed, and C2 indicates a position of a configuration point (namely, the detection point) of the radar/detection antenna after the robot rotates on the head of the bed. It can be learned from comparison between C1 and C2 that C1 is closer to the edge region of the target object. Therefore, although the position of the robot remains unchanged, after the robot rotates, the electronic device determines that the robot is no longer located in the edge region of the target object. C3 indicates a position of a configuration point (namely, the detection point) of the radar/detection antenna when the robot moves in a direction parallel to the baseline on the foot of the bed. C4 indicates a position of a configuration point (namely, the detection point) of the radar/detection antenna after the robot rotates on the foot of the bed. It can be learned from comparison between C3 and C4 that, although the position of the detection point changes after rotation, the robot reaches the foot of the bed (that is, the robot completes the task), and the radar/detection antenna of the rotated robot still detects that the robot is located in the edge region of the target object. Therefore, when detecting that the rotated robot is still located in the edge region of the target object, the electronic device may determine that the task is completed. It should be understood that the example in FIG. 9 is merely for ease of understanding the solution, and is not intended to limit the solution.

It should be noted that, when the robot executes the task, the position of the robot and the course angle of the robot are corrected based on a distance and an angle of the robot relative to the baseline. For a specific implementation, refer to descriptions in step 210 and step 211.

210: The electronic device obtains a first actual distance between the robot and the baseline in a target direction and a first course angle of the robot relative to the baseline.

In this embodiment of this application, after determining the baseline and completing initialization of the robot positioning process, the electronic device may control the robot to execute the task, and correct the position of the robot and the course angle of the robot based on the baseline when the robot executes the task. In other words, when the robot executes the task, the position of the robot and the course angle of the robot are corrected in step 210 and subsequent step 211.

The following describes a trigger condition of the electronic device for correcting the position and the course angle of the robot. In an implementation, the electronic device may correct the position of the robot and the course angle of the robot once at intervals of preset duration, and step 210 may include: The electronic device obtains the first actual distance between the robot and the baseline in the target direction and the first course angle of the robot relative to the baseline at intervals of preset duration. The preset duration may be 10 seconds, 20 seconds, 30 seconds, 1 minute, 5 minutes, or other data. This is not limited herein.

In another implementation, the electronic device may perform a correction operation when a value of x corresponding to the robot is a preset value. The preset value may be half of a maximum value of x, or the preset value may include three values: one quarter, one half, and three quarters of the maximum value of x. Examples are not enumerated herein. It should be noted that the two trigger conditions for correcting the position and the course angle of the robot provided in this embodiment of this application are merely for ease of understanding the solution. In an actual product, another trigger condition may also be used. Examples are not enumerated herein.

Specifically, because the electronic device controls the robot to move in a predetermined path, when the robot executes the task, although a course angle offset is generated in the moving process of the robot, the electronic device can learn an orientation of the robot relative to the baseline. In other words, the electronic device can learn that the baseline is in a target direction range of the robot. For example, a planned path for executing the task by the robot is in a zigzag pattern. When the robot reaches the edge region of the target object for the first time and rotates by 90 degrees, the baseline is located behind the moving direction of the robot. Therefore, it can be learned that the electronic device may determine the orientation of the robot relative to the baseline based on the moving path of the robot. It should be understood that the example herein is merely used to prove implementability of the solution, and is not intended to limit the solution. Further, the electronic device may directly obtain the expected course angle of the robot relative to the baseline according to Formula (1) shown in step 208, and further determine orientation information of the robot relative to the baseline.

The electronic device collects third point cloud data in a third target range of the robot by using the radar/detection antenna, of the robot, corresponding to the target direction range. The third target range is a detection range of the radar/detection antenna, of the robot, corresponding to the target direction range. The electronic device performs filtering and fitting based on the collected third point cloud data, to obtain position information of the robot relative to the baseline, that is, to obtain the first actual distance between the robot and the baseline in the target direction and the first course angle of the robot relative to the baseline. The target direction is a direction perpendicular to the baseline.

To more intuitively understand the solution, FIG. 10 is a schematic diagram of the first actual distance and the first course angle in the robot position correction method according to an embodiment of this application. D1 indicates the baseline, and a direction of an arrow in D1 indicates a positive direction of the x-axis. D2 indicates the first actual distance between the robot and the baseline, D3 indicates a current moving direction of the robot, and D4 indicates the first course angle of the robot relative to the baseline. The example in FIG. 10 is merely for ease of understanding the solution, and is not intended to limit the solution.

211: The electronic device controls the robot to move based on the expected distance between the robot and the baseline in the target direction, the first actual distance, and the first course angle, so that a second actual distance between the moved robot and the baseline in the target direction is the expected distance.

In this embodiment of this application, because the robot moves at a preset speed during task execution, the electronic device obtains the expected distance between the robot and the baseline in the target direction based on the planned path of the robot and the preset speed of the robot. The expected distance corresponds to the current position of the robot. Further, the electronic device may directly obtain the expected distance between the robot and the baseline in the target direction according to Formula (1) shown in step 208.

The electronic device controls the robot to move based on the expected distance between the robot and the baseline in the target direction, the first actual distance, and the first course angle, to correct the distance of the robot in the target direction, so that the second actual distance between the moved robot and the baseline in the target direction is the expected distance.

Specifically, when correcting the distance of the robot in the target direction, the electronic device further corrects the course angle of the robot, so that a corrected course angle is consistent with the expected course angle between the robot and the baseline. Step 211 may include: The electronic device calculates a first error distance of the robot in the target direction based on the expected distance and the first actual distance, and controls the robot to rotate based on the first course angle, so that a first moving direction of the rotated robot is perpendicular to the baseline. The first moving direction may be a moving direction approaching the baseline or a direction away from the baseline. The electronic device controls the robot to move by the first error distance in the first moving direction based on the first error distance, that is, controls the robot to move by the first error distance in the first moving direction, so that the second actual distance between the moved robot and the baseline in the target direction is the expected distance. After controlling the robot to move by the first error distance in the first moving direction, the electronic device controls the robot to rotate based on the planned path of the robot, to rotate an actual course angle of the robot relative to the baseline to an expected course angle.

It should be noted that a meaning of "controlling the robot to move by the first error distance in the first moving direction" herein means that the electronic device is intended to control the robot to move by the first error distance in the first moving direction, but in an actual situation, the robot may move by a third actual distance in the first moving direction. A difference between the third actual distance and the first error distance is small.

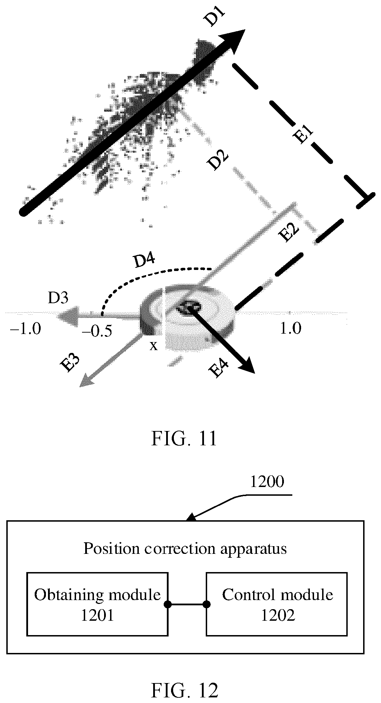

To more intuitively understand the solution, FIG. 11 is a schematic diagram of the expected distance, the first actual distance, and the first course angle in the robot position correction method according to an embodiment of this application. FIG. 11 may be understood with reference to FIG. 10. D1 indicates the baseline, and a direction of an arrow in D1 indicates a positive direction of the x-axis. D2 indicates the first actual distance between the robot and the baseline, E1 indicates the expected distance between the robot and the baseline, and E2 indicates a difference, namely, the first error distance, between the expected distance and the first actual distance. D3 indicates a current moving direction of the robot, and D4 indicates the first course angle of the robot relative to the baseline. E3 indicates an expected course of the robot relative to the baseline, and E4 indicates the first moving direction. In other words, the electronic device controls the robot to move by the distance indicated by E2 in the direction indicated by E4, so that the second actual distance between the moved robot and the baseline in the target direction is the expected distance. The example in FIG. 11 is merely for ease of understanding the solution, and is not intended to limit the solution.

In this embodiment of this application, a specific implementation solution of correcting a distance of the robot in the target direction based on the expected distance, the first actual distance, and the first course angle of the baseline in the target direction is provided. During correction, the robot is first controlled to rotate based on the first course angle of the robot relative to the baseline, so that the first moving direction of the rotated robot is perpendicular to the baseline. Then, when the robot is controlled to move after the distance of the robot in the target direction is corrected, the robot needs to be rotated to the expected course angle of the robot. In other words, both the distance of the robot in the target direction and the course angle of the robot are corrected. This ensures that a moving path of the robot can be planned, and further ensures that the moving path of the robot can fully cover the entire target object.

In this embodiment of this application, an electromagnetic wave emitted by the radar can penetrate a cotton object or a silk object, and the radar can measure the actual distance between the robot and the baseline and the first course angle by emitting an electromagnetic wave, and control the robot to move based on the expected distance between the robot and the baseline, the actual distance, and the first course angle, so that the actual distance between the moved robot and the baseline is the expected distance. Therefore, a relative positioning technology is used to correct a position of the robot based on the baseline, and a solution of automatically correcting a position of the robot in a moving process is provided. In addition, the solution can be applied to a scenario in which the robot works on a cotton object or a silk object, and can also be applied to a scenario in which the robot is covered by a cotton object or a silk object. Because positioning of the robot does not depend on collecting a surrounding environment, this significantly reduces effect of a working environment on the robot in a moving process, and further significantly expands an application scenario of the robot.

Based on the embodiments corresponding to FIG. 1 to FIG. 11, the following further provides a related device used to implement the solutions, to better implement the solutions in embodiments of this application. FIG. 12 is a schematic diagram of a structure of a position correction apparatus according to an embodiment of this application. A position correction apparatus 1200 includes: an obtaining module 1201, configured to obtain a first actual distance between a robot and a baseline in a target direction and a first course angle of the robot relative to the baseline, where the baseline is a boundary of a target object, the target direction is a direction perpendicular to the baseline, the first course angle is an included angle between a moving direction of the robot and the baseline, and the target object is an object related to a task executed by the robot; and a control module 1202, configured to control the robot to move based on an expected distance between the robot and the baseline in the target direction, the first actual distance, and the first course angle, so that a second actual distance between the moved robot and the baseline in the target direction is the expected distance. It should be noted that the position correction apparatus 1200 may specifically be represented as a processor disposed in the robot, or may be represented as the entire robot.

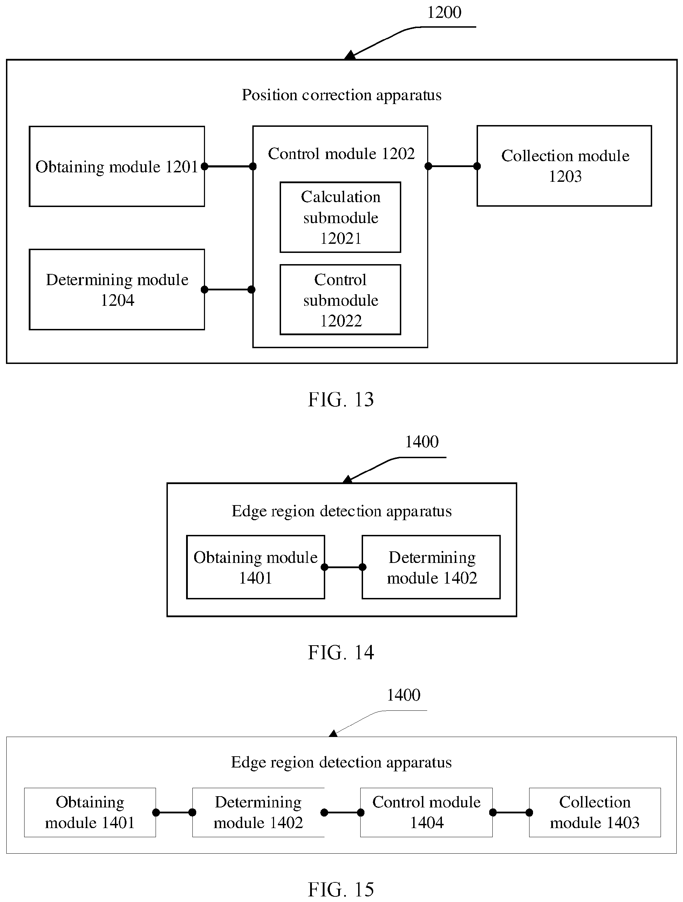

In a possible design, FIG. 13 is a schematic diagram of a structure of the position correction apparatus according to an embodiment of this application. The control module 1202 includes a calculation submodule 12021 and a control submodule 12022. The calculation submodule 12021 is configured to: calculate a first error distance of the robot in the target direction based on the expected distance and the first actual distance, and control the robot to rotate based on the first course angle, so that a first moving direction of the rotated robot is perpendicular to the baseline. The control submodule 12022 is configured to control the robot to move in the first moving direction based on the first error distance, so that the second actual distance between the moved robot and the baseline in the target direction is the expected distance.

In a possible design, refer to FIG. 13. The apparatus 1200 further includes: a collection module 1203, configured to collect first point cloud data of an environment in a target range of the robot by using a radar, where the environment in the target range includes an environment in front of the robot in a current detection range of the radar, the control module 1202 is further configured to: when determining, based on the first point cloud data, that the boundary of the target object exists in a surrounding environment in the target range of the robot, control the robot to move towards the boundary of the target object, and detect whether the robot is located in an edge region of the target object when the robot moves towards the boundary of the target object, and a probability that the robot falls from the edge region of the target object is greater than a probability that the robot falls from a non-edge region of the target object; and a determining module 1204, configured to: when a distance between the robot and the boundary of the target object is less than a first threshold, and the robot is not located in the edge region of the target object, determine the boundary of the target object as the baseline.

In a possible design, the determining module 1204 is specifically configured to: obtain at least one piece of prestored second point cloud data; obtain a similarity between the first point cloud data and each of the at least one piece of second point cloud data; and if target point cloud data exists in the at least one piece of second point cloud data, determine that the boundary of the target object exists in the surrounding environment in the target range of the robot, where a similarity between the target point cloud data and the first point cloud data is greater than or equal to a preset similarity threshold; or the determining module 1204 is specifically configured to: perform a fitting operation on the first point cloud data, and if a fitting result of the first point cloud data is a linear function and a fitting error of the linear function is less than a preset error threshold, determine that the boundary of the target object exists in the surrounding environment in the target range of the robot.

In a possible design, the control module 1202 is further configured to: control the robot to move along the baseline, and when the robot moves to the edge region of the target object, control the robot to stop moving. The determining module 1204 is further configured to use a current position point of the robot as a benchmark, where the benchmark is a start point at which the robot executes the task. The obtaining module 1201 is specifically configured to: when the robot executes the task, obtain the first actual distance between the robot and the baseline in the target direction and the first course angle of the robot relative to the baseline.

In a possible design, when the robot executes the task, a moving path is in a zigzag pattern, the moving path in the zigzag pattern includes a second moving direction and a third moving direction, the second moving direction is parallel to the baseline, and the third moving direction is perpendicular to the baseline.

In a possible design, the obtaining module 1201 is further configured to obtain at least one first distance between the robot and a detected object under the robot by using the radar, and select a maximum distance from the at least one first distance as a target distance. The control module 1202 is specifically configured to: when the robot moves towards the boundary of the target object, obtain a second distance between the robot and the detected object under the robot by using the radar; and when determining, based on the target distance and the second distance, that a first condition is met, determine that the robot is located in the edge region of the target object. The first condition indicates that a difference between the second distance and the target distance is greater than or equal to a second threshold.

In a possible design, the obtaining module 1201 is further configured to: when the robot executes the task, obtain, by using a radar, a third distance between the robot and the detected object under the robot by using the radar. The determining module 1204 is further configured to: when determining, based on the target distance and the third distance, that the first condition is met, determine that the robot is located in the edge region of the target object, and control the robot to change a moving direction.

It should be noted that content such as information exchange or an execution process between the modules/units in the position correction apparatus 1200 is based on a same concept as method embodiments corresponding to FIG. 2A and FIG. 2B to FIG. 11 in this application. For specific content, refer to descriptions in the method embodiments in this application. Details are not described herein again.

An embodiment further provides an edge region detection apparatus. FIG. 14 is a schematic diagram of a structure of the edge region detection apparatus. An edge region detection apparatus 1400 includes: an obtaining module 1401, configured to: obtain at least one first distance, and select a maximum distance from the at least one first distance as a target distance, where the first distance is a distance between a robot and a detected object under the robot before the robot moves; and obtain a second distance, where the second distance is a distance between the robot and the detected object under the robot when the robot moves; and a determining module 1402, configured to: when determining, based on the target distance and the second distance, that a first condition is met, determine that the robot is located in an edge region of a target object, where a probability that the robot falls from the edge region of the target object is greater than a probability that the robot falls from a non-edge region of the target object, the first condition indicates that a difference between the second distance and the target distance is greater than a first threshold, and the target object is an object related to a task executed by the robot. It should be noted that the edge region detection apparatus 1400 may specifically be represented as a processor disposed in the robot, or may be represented as the entire robot.

In a possible design, FIG. 15 is a schematic diagram of a structure of the edge region detection apparatus of the robot. The edge region detection apparatus 1400 further includes: a collection module 1403, configured to collect first point cloud data of an environment in a target range of the robot by using a radar, where the environment in the target range includes an environment in front of the robot in a current detection range of the radar; and a control module 1404, configured to: when determining, based on the first point cloud data, that a boundary of the target object exists in a surrounding environment in the target range of the robot, control the robot to move towards the boundary of the target object, where a process in which the robot moves towards the boundary of the target object belongs to a moving process of the robot. The determining module 1402 is further configured to: when a distance between the robot and the boundary of the target object is less than the first threshold, and the robot is not located in the edge region of the target object, determine the boundary of the target object as a baseline, where the baseline is used to assist the robot in positioning when the robot executes the task.

It should be noted that content such as information exchange or an execution process between the modules/units in the edge region detection apparatus 1400 is based on a same concept as method embodiments corresponding to FIG. 2A and FIG. 2B to FIG. 11 in this application. For specific content, refer to descriptions in the method embodiments in this application. Details are not described herein again.

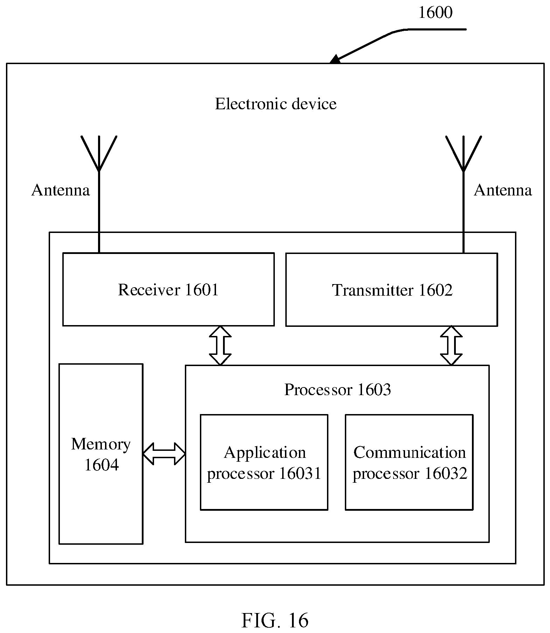

An embodiment of this application further provides an electronic device. FIG. 16 is a schematic diagram of a structure of the electronic device according to an embodiment of this application. The position correction apparatus 1200 described in the embodiment corresponding to FIG. 12 or FIG. 13 may be disposed on the electronic device 1600, or the edge region detection apparatus 1400 described in the embodiment corresponding to FIG. 14 or FIG. 15 may be disposed on the electronic device 1600. Specifically, the electronic device 1600 includes: a receiver 1601, a transmitter 1602, a processor 1603, and a memory 1604 (there may be one or more processors 1603 in the electronic device 1600, and one processor is used as an example in FIG. 16). The processor 1603 may include an application processor 16031 and a communication processor 16032. In some embodiments of this application, the receiver 1601, the transmitter 1602, the processor 1603, and the memory 1604 may be connected by using a bus or in another manner.

The memory 1604 may include a read-only memory and a random access memory, and provide instructions and data for the processor 1603. A part of the memory 1604 may further include a nonvolatile random access memory (nonvolatile random access memory, NVRAM). The memory 1604 stores a processor and operation instructions, an executable module or a data structure, a subnet thereof, or an extended set thereof. The operation instructions may include various operation instructions to implement various operations.

The processor 1603 controls an operation of the electronic device. During specific application, the components of the electronic device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1603, or may be implemented by the processor 1603. The processor 1603 may be an integrated circuit chip, and have a signal processing capability. In an implementation process, steps in the methods can be implemented by using a hardware integrated logical circuit in the processor 1603, or by using instructions in a form of software. The processor 1603 may be a general-purpose processor, a digital signal processor (digital signal processor, DSP), a microprocessor, or a microcontroller. The processor 1603 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1603 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor 1603.

The receiver 1601 may be configured to receive input digital or character information, and generate a signal input related to setting and function control of the electronic device. The transmitter 1602 may be configured to output digital or character information by using a first interface. The transmitter 1602 may further be configured to send instructions to a disk group by using the first interface, to modify data in the disk group. The transmitter 1602 may further include a display device such as a display screen.

In this embodiment of this application, in one case, the application processor 16031 is configured to perform the function performed by the position correction apparatus 1200 in the embodiment corresponding to FIG. 12 or FIG. 13.

Specifically, the application processor 16031 is configured to:

obtain a first actual distance between a robot and a baseline in a target direction and a first course angle of the robot relative to the baseline, where the baseline is a boundary of a target object, the target direction is a direction perpendicular to the baseline, the first course angle is an included angle between a moving direction of the robot and the baseline, and the target object is an object related to a task executed by the robot; and control the robot to move based on an expected distance between the robot and the baseline in the target direction, the first actual distance, and the first course angle, so that a second actual distance between the moved robot and the baseline in the target direction is the expected distance.

It should be noted that for beneficial effect and a specific implementation in which the application processor 16031 performs steps performed by the position correction apparatus 1200 in the embodiment corresponding to FIG. 12 or FIG, 13, refer to descriptions in the method embodiments corresponding to FIG. 2A and FIG. 2B to FIG. 11. Details are not described herein again.

In one case, the application processor 16031 is configured to perform the function performed by the edge region detection apparatus 1400 in the embodiment corresponding to FIG. 14 or FIG. 15. Specifically, the application processor 16031 is configured to:

obtain at least one first distance, and select a maximum distance from the at least one first distance as a target distance, where the first distance is a distance between a robot and a detected object under the robot before the robot moves; and obtain a second distance, where the second distance is a distance between the robot and the detected object under the robot when the robot moves; and when determining, based on the target distance and the second distance, that a first condition is met, determine that the robot is located in an edge region of a target object, where a probability that the robot falls from the edge region of the target object is greater than a probability that the robot falls from a non-edge region of the target object, the first condition indicates that a difference between the second distance and the target distance is greater than a first threshold, and the target object is an object related to a task executed by the robot.

It should be noted that for beneficial effect and a specific implementation in which the application processor 16031 performs the function performed by the edge region detection apparatus 1400 in the embodiment corresponding to FIG. 14 or FIG, 15, refer to descriptions in the method embodiments corresponding to FIG. 2A and FIG. 2B to FIG. 11. Details are not described herein again.

An embodiment of this application further provides a computer-readable storage medium. The computer-readable storage medium stores a program. When the program is run on a computer, the computer is enabled to perform the steps performed by the electronic device in the embodiments corresponding to FIG. 2A and FIG. 2B to FIG. 11.

An embodiment of this application further provides a computer program product. When the computer program product runs on a computer, the computer is enabled to perform the steps performed by the electronic device in the embodiments corresponding to FIG. 2A and FIG. 2B to FIG. 11.

An embodiment of this application further provides a circuit system. The circuit system includes a processing circuit, and the processing circuit is configured to perform the steps performed by the electronic device in the embodiments corresponding to FIG. 2A and FIG. 2B to FIG. 11.

The electronic device or the training device in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip performs the steps performed by the electronic device in the embodiments corresponding to FIG. 2A and FIG. 2B to FIG. 11. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

The processor mentioned above may be a general-purpose central processing unit, a microprocessor, ASIC, or one or more integrated circuits for controlling program execution in the method in the first aspect.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected based on an actual requirement to achieve objectives of the solutions of the embodiments. In addition, in the accompanying drawings of the apparatus embodiments provided in this application, connection relationships between modules indicate that the modules have communication connections with each other, which may specifically be implemented as one or more communication buses or signal cables.

Based on the descriptions of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, for this application, software program implementation is a better implementation in more cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A robot position correction method, wherein the method comprises:

    obtaining (201) a first actual distance between a robot and a baseline in a target direction and a first course angle of the robot relative to the baseline, wherein the baseline is a boundary of a target object, the target direction is a direction perpendicular to the baseline, the first course angle is an included angle between a moving direction of the robot and the baseline, and the target object is an object related to a task executed by the robot; and
    controlling (204) the robot to move based on an expected distance between the robot and the baseline in the target direction, the first actual distance, and the first course angle, so that a second actual distance between the moved robot and the baseline in the target direction is the expected distance,
    **characterized in that**, before the obtaining a first actual distance between a robot and a baseline in a target direction and a first course angle of the robot relative to the baseline, the method further comprises:

    collecting (202) first point cloud data of an environment in a target range of the robot by using a radar (20), wherein the environment in the target range comprises an environment in front of the robot in a current detection range of the radar;
    performing a filtering operation and a fitting operation on the first point cloud data;
    determining (203) that the boundary of the target object exists in a surrounding environment in the target range of the robot if a fitting result of the first point cloud data is a linear function and a fitting error of the linear function is less than a preset error threshold;
    when determining, based on the first point cloud data, that the boundary of the target object exists in the surrounding environment in the target range of the robot, controlling the robot to move towards the boundary of the target object, and detecting whether the robot is located in an edge region of the target object when the robot moves towards the boundary of the target object, wherein a probability that the robot falls from the edge region of the target object is greater than a probability that the robot falls from a non-edge region of the target object; and
    when a distance between the robot and the boundary of the target object is less than a first threshold, and the robot is not located in the edge region of the target object, determining the boundary of the target object as the baseline.

2. The method according to claim **1,** wherein the controlling the robot to move based on an expected distance between the robot and the baseline in the target direction, the first actual distance, and the first course angle, so that a second actual distance between the moved robot and the baseline in the target direction is the expected distance comprises:

calculating a first error distance of the robot in the target direction based on the expected distance and the first actual distance, and controlling the robot to rotate based on the first course angle, so that a first moving direction of the rotated robot is perpendicular to the baseline; and

controlling the robot to move in the first moving direction based on the first error distance, so that the second actual distance between the moved robot and the baseline in the target direction is the expected distance.

3. The method according to claim 1 or 2, wherein the determining, based on the first point cloud data, that the boundary of the target object exists in a surrounding environment in the target range of the robot comprises:

obtaining at least one piece of prestored second point cloud data; obtaining a similarity between the first point cloud data and each of the at least one piece of second point cloud data; and if target point cloud data exists in the at least one piece of second point cloud data, determining that the boundary of the target object exists in the surrounding environment in the target range of the robot, wherein a similarity between the target point cloud data and the first point cloud data is greater than or equal to a preset similarity threshold; or

performing a fitting operation on the first point cloud data, and if a fitting result of the first point cloud data is a linear function and a fitting error of the linear function is less than a preset error threshold, determining that the boundary of the target object exists in the surrounding environment in the target range of the robot.

4. The method according to any one of claims 1 to 3, wherein before the obtaining a first actual distance between a robot and a baseline in a target direction and a first course angle of the robot relative to the baseline, the method further comprises:

controlling the robot to move along the baseline, and when the robot moves to the edge region of the target object, controlling the robot to stop moving; and

using a current position point of the robot as a benchmark, wherein the benchmark is a start point at which the robot executes the task; and

the obtaining a first actual distance between a robot and a baseline in a target direction and a first course angle of the robot relative to the baseline comprises:

when the robot executes the task, obtaining the first actual distance between the robot and the baseline in the target direction and the first course angle of the robot relative to the baseline.

5. The method according to claim 4, wherein when the robot executes the task, a moving path is in a zigzag pattern, the moving path in the zigzag pattern comprises a second moving direction and a third moving direction, the second moving direction is parallel to the baseline, and the third moving direction is perpendicular to the baseline.

6. The method according to any one of claims 1 to 5, wherein before the controlling the robot to move towards the boundary of the target object, the method further comprises:

obtaining at least one first distance between the robot and a detected object under the robot by using the radar, and selecting a maximum distance from the at least one first distance as a target distance; and

the detecting whether the robot is located in an edge region of the target object when the robot moves towards the boundary of the target object comprises:

when the robot moves towards the boundary of the target object, obtaining a second distance between the robot and the detected object under the robot by using the radar; and

when determining, based on the target distance and the second distance, that a first condition is met, determining that the robot is located in the edge region of the target object, wherein the first condition indicates that a difference between the second distance and the target distance is greater than or equal to a second threshold.

7. The method according to claim 6, wherein the method further comprises:

when the robot executes the task, obtaining a third distance between the robot and the detected object under the robot by using the radar; and

when determining, based on the target distance and the third distance, that the first condition is met, determining that the robot is located in the edge region of the target object, and controlling the robot to change a moving direction.

8. An electronic device (1600), comprising a processor (1603), wherein the processor is coupled to a memory (1604), the memory stores program instructions, and when the program instructions stored in the memory are executed by the processor, the method according to any one of claims 1 to 7 is performed.

9. A computer-readable storage medium, comprising a program, wherein when the program is run on a computer, the computer is enabled to perform steps in the robot position correction method according to any one of claims 1 to 7.

10. A circuit system, wherein the circuit system comprises a processing circuit, and the processing circuit is configured to perform steps in the robot position correction method according to any one of claims 1 to 7.

**Patentansprüche**

1. Positionskorrekturverfahren für Roboter, wobei das Verfahren umfasst:

Erhalten (201) eines ersten tatsächlichen Abstands zwischen einem Roboter und einer Grundlinie in einer Zielrichtung und eines ersten Kurswinkels des Roboters relativ zur Grundlinie, wobei die Grundlinie eine Grenze eines Zielobjekts ist, die Zielrichtung eine Richtung senkrecht zur Grundlinie ist, der erste Kurswinkel ein eingeschlossener Winkel zwischen einer Bewegungsrichtung des Roboters und der Grundlinie ist und das Zielobjekt ein Objekt ist, das mit einer durch den Roboter ausgeführten Aufgabe in Zusammenhang steht; und Steuern (204) des Roboters zur Bewegung basierend auf einem erwarteten Abstand zwischen dem Roboter und der Grundlinie in der Zielrichtung, dem ersten tatsächlichen Abstand und dem ersten Kurswinkel, sodass ein zweiter tatsächlicher Abstand zwischen dem bewegten Roboter und der Grundlinie in der Zielrichtung dem erwarteten Abstand entspricht,
**dadurch gekennzeichnet, dass**
vor dem Erhalten eines ersten tatsächlichen Abstands zwischen einem Roboter und einer Grundlinie in einer Zielrichtung und eines ersten Kurswinkels des Roboters relativ zur Grundlinie das Verfahren ferner umfasst:

Erfassen (202) erster Punktwolkendaten einer Umgebung in einem Zielbereich des Roboters durch Verwenden eines Radars (20), wobei die Umgebung im Zielbereich eine Umgebung vor dem Roboter in einem aktuellen Erkennungsbereich des Radars umfasst; Durchführen einer Filteroperation und einer Anpassungsoperation an den ersten Punktwolkendaten;
Bestimmen (203), dass die Grenze des Zielobjekts in einer umgebenden Umgebung im Zielbereich des Roboters vorhanden ist, wenn ein Anpassungsergebnis der ersten Punktwolkendaten eine lineare Funktion ist und ein Anpassungsfehler der linearen Funktion kleiner als ein voreingestellter Fehlerschwellenwert ist; wenn basierend auf den ersten Punktwolkendaten bestimmt wird, dass die Grenze des Zielobjekts in der umgebenden Umgebung im Zielbereich des Roboters vorhanden ist, Steuern des Roboters zur Bewegung in Richtung der Grenze des Zielobjekts und Erkennen, ob sich der Roboter in einem Randbereich des Zielobjekts befindet, wenn sich der Roboter in Richtung der Grenze des Zielobjekts bewegt, wobei eine Wahrscheinlichkeit, dass der Roboter aus dem Randbereich des Zielobjekts fällt, größer ist als eine Wahrscheinlichkeit, dass der Roboter aus einem Nicht-Randbereich des Zielobjekts fällt; und wenn ein Abstand zwischen dem Roboter und der Grenze des Zielobjekts kleiner als ein erster Schwellenwert ist und sich der Roboter nicht im Randbereich des Zielobjekts befindet, Bestimmen der Grenze des Zielobjekts als die Grundlinie.

2. Verfahren nach Anspruch 1, wobei das Steuern des Roboters zur Bewegung basierend auf einem erwarteten Abstand zwischen dem Roboter und der Grundlinie in der Zielrichtung, dem ersten tatsächlichen Abstand und dem ersten Kurswinkel, sodass ein zweiter tatsächlicher Abstand zwischen dem bewegten Roboter und der Grundlinie in der Zielrichtung dem erwarteten Abstand entspricht, umfasst:

Berechnen eines ersten Fehlerabstands des Roboters in der Zielrichtung basierend auf dem erwarteten Abstand und dem ersten tatsächlichen Abstand und Steuern des Roboters zur Drehung basierend auf dem ersten Kurswinkel, sodass eine erste Bewegungsrichtung des gedrehten Roboters senkrecht zur Grundlinie verläuft; und
Steuern des Roboters zur Bewegung in die erste Bewegungsrichtung basierend auf dem ersten Fehlerabstand, sodass der zweite tatsächliche Abstand zwischen dem bewegten Roboter und der Grundlinie in der Zielrichtung dem erwarteten Abstand entspricht.

3. Verfahren nach Anspruch 1 oder 2, wobei das Bestimmen, basierend auf den ersten Punktwolkendaten, dass die Grenze des Zielobjekts in einer umgebenden Umgebung im Zielbereich des Roboters vorhanden ist, umfasst:

Erhalten mindestens eines Elements vorgespeicherter zweiter Punktwolkendaten; Erhalten einer Ähnlichkeit zwischen den ersten Punktwolkendaten und jedem des mindestens einen Elements zweiter Punktwolkendaten; und wenn Zielpunktwolkendaten im mindestens einen Element zweiter Punktwolkendaten vorhanden sind, Bestimmen, dass die Grenze des Zielobjekts in der umgebenden Umgebung im Zielbereich des Roboters vorhanden ist, wobei eine Ähnlichkeit zwischen den Zielpunktwolkendaten und den ersten Punktwolkendaten größer oder gleich einem voreingestellten Ähnlichkeitsschwellenwert ist; oder

Durchführen einer Anpassungsoperation an den ersten Punktwolkendaten und, wenn ein Anpassungsergebnis der ersten Punktwolkendaten eine lineare Funktion ist und ein Anpassungsfehler der linearen Funktion kleiner als ein voreingestellter Fehlerschwellenwert ist, Bestimmen, dass die Grenze des Zielobjekts in der umgebenden Umgebung im Zielbereich des Roboters vorhanden ist.

4. Verfahren nach einem der Ansprüche 1 bis 3, wobei vor dem Erhalten eines ersten tatsächlichen Abstands zwischen einem Roboter und einer Grundlinie in einer Zielrichtung und eines ersten Kurswinkels des Roboters relativ zur Grundlinie das Verfahren ferner umfasst:

Steuern des Roboters zur Bewegung entlang der Grundlinie, und wenn sich der Roboter zum Randbereich des Zielobjekts bewegt, Steuern des Roboters zum Stoppen der Bewegung; und

Verwenden eines aktuellen Positionspunkts des Roboters als Bezugspunkt, wobei der Bezugspunkt ein Startpunkt ist, an dem der Roboter die Aufgabe ausführt; und

das Erhalten eines ersten tatsächlichen Abstands zwischen einem Roboter und einer Grundlinie in einer Zielrichtung und eines ersten Kurswinkels des Roboters relativ zur Grundlinie umfasst:

wenn der Roboter die Aufgabe ausführt, Erhalten des ersten tatsächlichen Abstands zwischen dem Roboter und der Grundlinie in der Zielrichtung und des ersten Kurswinkels des Roboters relativ zur Grundlinie.

5. Verfahren nach Anspruch 4, wobei, wenn der Roboter die Aufgabe ausführt, ein Bewegungspfad in einem Zickzackmuster verläuft, der Bewegungspfad im Zickzackmuster eine zweite Bewegungsrichtung und eine dritte Bewegungsrichtung umfasst, die zweite Bewegungsrichtung parallel zur Grundlinie verläuft und die dritte Bewegungsrichtung senkrecht zur Grundlinie verläuft.

6. Verfahren nach einem der Ansprüche 1 bis 5, wobei vor dem Steuern des Roboters zur Bewegung in Richtung der Grenze des Zielobjekts das Verfahren ferner umfasst:

Erhalten mindestens eines ersten Abstands zwischen dem Roboter und einem erkannten Objekt unter dem Roboter durch Verwenden des Radars und Auswählen eines maximalen Abstands aus dem mindestens einen ersten Abstand als einen Zielabstand; und

das Erkennen, ob sich der Roboter in einem Randbereich des Zielobjekts befindet, wenn sich der Roboter in Richtung der Grenze des Zielobjekts bewegt, umfasst:

wenn sich der Roboter in Richtung der Grenze des Zielobjekts bewegt, Erhalten eines zweiten Abstands zwischen dem Roboter und dem erkannten Objekt unter dem Roboter durch Verwenden des Radars; und

wenn basierend auf dem Zielabstand und dem zweiten Abstand bestimmt wird, dass eine erste Bedingung erfüllt ist, Bestimmen, dass sich der Roboter im Randbereich des Zielobjekts befindet, wobei die erste Bedingung angibt, dass eine Differenz zwischen dem zweiten Abstand und dem Zielabstand größer oder gleich einem zweiten Schwellenwert ist.

7. Verfahren nach Anspruch 6, wobei das Verfahren ferner umfasst:

wenn der Roboter die Aufgabe ausführt, Erhalten eines dritten Abstands zwischen dem Roboter und dem erkannten Objekt unter dem Roboter durch Verwenden des Radars; und

wenn basierend auf dem Zielabstand und dem dritten Abstand bestimmt wird, dass die erste Bedingung erfüllt ist, Bestimmen, dass sich der Roboter im Randbereich des Zielobjekts befindet, und Steuern des Roboters zum Ändern einer Bewegungsrichtung.

8. Elektronische Vorrichtung (1600), die einen Prozessor (1603) umfasst, wobei der Prozessor mit einem Speicher (1604) gekoppelt ist, der Speicher Programmanweisungen speichert, und wenn die im Speicher gespeicherten Programmanweisungen durch den Prozessor ausgeführt werden, das Verfahren nach einem der Ansprüche 1 bis 7 durchgeführt wird.

9. Computerlesbares Speicherungsmedium, das ein Programm umfasst, wobei, wenn das Programm auf einem Computer ausgeführt wird, der Computer in die Lage versetzt wird, die Schritte im Positionskorrekturverfahren für Roboter nach einem der Ansprüche 1 bis 7 durchzuführen.

10. Schaltungssystem, wobei das Schaltungssystem eine Verarbeitungsschaltung umfasst und die Verarbeitungsschaltung konfiguriert ist, um Schritte im Positionskorrekturverfahren für Roboter nach einem der Ansprüche 1 bis 7 durchzuführen.

**Revendications**

1. Procédé de correction de position de robot, dans lequel le procédé comprend :

l'obtention (201) d'une première distance réelle entre un robot et une ligne de base dans une direction cible et d'un premier angle de parcours du robot par rapport à la ligne de base, dans lequel la ligne de base est une limite d'un objet cible, la direction cible est une direction perpendiculaire à la ligne de base, le premier angle de parcours est un angle inclus entre une direction de déplacement du robot et la ligne de base, et l'objet cible est un objet lié à une tâche exécutée par le robot ; et
la commande (204) du robot pour qu'il se déplace en fonction d'une distance prévue entre le robot et la ligne de base dans la direction cible, de la première distance réelle et du premier angle de parcours, de sorte qu'une deuxième distance réelle entre le robot déplacé et la ligne de base dans la direction cible est la distance prévue, **caractérisé en ce que,**
avant l'obtention d'une première distance réelle entre un robot et une ligne de base dans une direction cible et d'un premier angle de parcours du robot par rapport à la ligne de base, le procédé comprend en outre :

la collecte (202) de premières données de nuage de points d'un environnement dans une plage cible du robot en utilisant un radar (20), dans lequel l'environnement dans la plage cible comprend un environnement devant le robot dans une plage de détection actuelle du radar ;
la réalisation d'une opération de filtrage et d'une opération d'ajustement sur les premières données de nuage de points ;
le fait de déterminer (203) que la limite de l'objet cible existe dans un environnement ambiant dans la plage cible du robot si un résultat d'ajustement des premières données de nuage de points est une fonction linéaire et une erreur d'ajustement de la fonction linéaire est inférieure à un seuil d'erreur prédéfini ;
lors du fait de déterminer, en fonction des premières données de nuage de points, que la limite de l'objet cible existe dans l'environnement ambiant dans la plage cible du robot, la commande du robot pour qu'il se déplace vers la limite de l'objet cible, et le fait de détecter si le robot est situé dans une zone de bord de l'objet cible lorsque le robot se déplace vers la limite de l'objet cible, dans lequel une probabilité que le robot tombe de la zone de bord de l'objet cible est supérieure à une probabilité que le robot tombe d'une zone de non-bord de l'objet cible ; et
lorsqu'une distance entre le robot et la limite de l'objet cible est inférieure à un premier seuil, et que le robot n'est pas situé dans la zone de bord de l'objet cible, la détermination de la limite de l'objet cible comme la ligne de base.

2. Procédé selon la revendication 1, dans lequel la commande du robot pour qu'il se déplace en fonction d'une distance prévue entre le robot et la ligne de base dans la direction cible, de la première distance réelle et du premier angle de parcours, de sorte qu'une deuxième distance réelle entre le robot déplacé et la ligne de base dans la direction cible est la distance prévue comprend :

le calcul d'une première distance d'erreur du robot dans la direction cible en fonction de la distance prévue et de la première distance réelle, et la commande du robot pour qu'il soit en rotation en fonction du premier angle de parcours, de sorte qu'une première direction de déplacement du robot en rotation est perpendiculaire à la ligne de base ; et
la commande du robot pour qu'il se déplace dans la première direction de déplacement en fonction de la première distance d'erreur, de sorte que la deuxième distance réelle entre le robot déplacé et la ligne de base dans la direction cible est la distance prévue.

**3.** Procédé selon la revendication 1 ou 2, dans lequel le fait de déterminer, en fonction des premières données de nuage de points, que la limite de l'objet cible existe dans un environnement ambiant dans la plage cible du robot comprend :

l'obtention d'au moins une partie de secondes données de nuage de points préstockées ; l'obtention d'une similarité entre les premières données de nuage de points et chacune de l'au moins une partie de secondes données de nuage de points ; et si des données de nuage de points cibles existent dans l'au moins une partie de secondes données de nuage de points, le fait de déterminer que la limite de l'objet cible existe dans l'environnement ambiant dans la plage cible du robot, dans lequel une similarité entre les données de nuage de points cibles et les premières données de nuage de points est supérieure ou égale à un seuil de similarité prédéfini ; ou la réalisation d'une opération d'ajustement sur les premières données de nuage de points et, si un résultat d'ajustement des premières données de nuage de points est une fonction linéaire et une erreur d'ajustement de la fonction linéaire est inférieure à un seuil d'erreur prédéfini, le fait de déterminer que la limite de l'objet cible existe dans l'environnement ambiant dans la plage cible du robot.

**4.** Procédé selon l'une quelconque des revendications 1 à 3, dans lequel avant l'obtention d'une première distance réelle entre un robot et une ligne de base dans une direction cible et d'un premier angle de parcours du robot par rapport à la ligne de base, le procédé comprend en outre :

la commande du robot pour qu'il se déplace le long de la ligne de base et, lorsque le robot se déplace jusqu'à la zone de bord de l'objet cible, la commande du robot pour qu'il arrête de se déplacer ; et l'utilisation d'un point de position actuel du robot comme un point de référence, dans lequel le point de référence est un point de départ à partir duquel le robot exécute la tâche ; et l'obtention d'une première distance réelle entre un robot et une ligne de base dans une direction cible et d'un premier angle de parcours du robot par rapport à la ligne de base comprend : lorsque le robot exécute la tâche, l'obtention de la première distance réelle entre le robot et la ligne de base dans la direction cible et du premier angle de parcours du robot par rapport à la ligne de base.

**5.** Procédé selon la revendication 4, dans lequel, lorsque le robot exécute la tâche, une trajectoire de déplacement est dans un motif en zigzag, la trajectoire de déplacement dans le motif en zigzag comprend une deuxième direction de déplacement et une troisième direction de déplacement, la deuxième direction de déplacement est parallèle à la ligne de base, et la troisième direction de déplacement est perpendiculaire à la ligne de base.

**6.** Procédé selon l'une quelconque des revendications 1 à 5, dans lequel avant la commande du robot pour qu'il se déplace vers la limite de l'objet cible, le procédé comprend en outre :

l'obtention d'au moins une première distance entre le robot et un objet détecté sous le robot en utilisant le radar, et la sélection d'une distance maximale à partir de l'au moins une première distance comme une distance cible ; et le fait de détecter si le robot est situé dans une zone de bord de l'objet cible lorsque le robot se déplace vers la limite de l'objet cible comprend :

lorsque le robot se déplace vers la limite de l'objet cible, l'obtention d'une deuxième distance entre le robot et l'objet détecté sous le robot en utilisant le radar ; et lors du fait de déterminer, en fonction de la distance cible et de la deuxième distance, qu'une première condition est remplie, le fait de déterminer que le robot est situé dans la zone de bord de l'objet cible, dans lequel la première condition indique qu'une différence entre la deuxième distance et la distance cible est supérieure ou égale à un second seuil.

**7.** Procédé selon la revendication 6, dans lequel le procédé comprend en outre :

lorsque le robot exécute la tâche, l'obtention d'une troisième distance entre le robot et l'objet détecté sous le robot en utilisant le radar ; et lorsqu'il est déterminé, en fonction de la distance cible et de la troisième distance, que la première condition est remplie, le fait de déterminer que le robot est situé dans la zone de bord de l'objet cible, et la commande du robot pour qu'il modifie une direction de déplacement.

**8.** Dispositif électronique (1600), comprenant un processeur (1603), dans lequel le processeur est couplé à une mémoire (1604), la mémoire stocke des instructions de programme, et lorsque les instructions de programme stockées dans la mémoire sont exécutées par le processeur, le procédé selon l'une quelconque des revendications 1 à 7 est réalisée.

9. Support de stockage lisible par ordinateur, comprenant un programme, dans lequel, lorsque le programme est mis en œuvre sur un ordinateur, l'ordinateur est activé pour réaliser les étapes dans le procédé de correction de position de robot selon l'une quelconque des revendications 1 à 7.

10. Système de circuit, dans lequel le système de circuit comprend un circuit de traitement, et le circuit de traitement est configuré pour réaliser les étapes dans le procédé de correction de position de robot selon l'une quelconque des revendications 1 à 7.

FIG. 1

An electronic device obtains at least one first distance between a robot and a detected object under the robot by using a radar, and selects a maximum distance from the at least one first distance as a target distance  ⟋ 201

The electronic device collects point cloud data of an environment in a target range of the robot by using the radar, where the environment in the target range includes an environment in front of the robot in a current detection range of the radar  ⟋ 202

The electronic device determines, based on the point cloud data of the environment in the target range of the robot, whether a boundary of the target object exists in the environment in the target range of the robot  ⟋ 203

The electronic device controls the robot to move towards the boundary of the target object  ⟋ 204

The electronic device detects a distance between the robot and the boundary of the target object when the robot moves towards the boundary of the target object  ⟋ 205

The electronic device detects whether the robot is located in an edge region of the target object when the robot moves towards the boundary of the target object  ⟋ 206

TO
FIG. 2B

FIG. 2A

CONT.
FROM
FIG. 2A

~

The electronic
device determines whether the
distance between the robot and the boundary of the
target object is less than a first threshold, and the robot is
not located in the edge region of the
target object

207

The electronic device determines the boundary of the target object as a baseline

208

The electronic device controls the robot to move along the baseline, and when the robot moves to the edge region of the target object, controls the robot to stop moving, and uses a current position point of the robot as a benchmark

209

The electronic device obtains a first actual distance between the robot and the baseline in a target direction and a first course angle of the robot relative to the baseline

210

The electronic device controls the robot to move based on an expected distance between the robot and the baseline in the target direction, the first actual distance, and the first course angle, so that a second actual distance between the moved robot and the baseline in the target direction is the expected distance

211

FIG. 2B

Intensity — 0.18 m

Intensity — 0.30 m

(a) Distance between a robot and a detected object

(b) Distance between the robot and the detected object

FIG. 3

FIG. 4

FIG. 5

Intensity

Distance between a robot and a detected object

FIG. 6

FIG. 7

Baseline

(a)

Move towards the baseline in a first direction

(b)

Move along the baseline

(c)

A robot is located in an edge region of a bed, and stops moving

(d)

Determine a current position of the robot as a benchmark

(e)

FIG. 8

FIG. 9

FIG. 10

FIG. 11

FIG. 12

1200

Position correction apparatus

Obtaining module 1201

Determining module 1204

Control module 1202

Calculation submodule 12021

Control submodule 12022

Collection module 1203

FIG. 13

1400

Edge region detection apparatus

Obtaining module 1401

Determining module 1402

FIG. 14

1400

Edge region detection apparatus

Obtaining module 1401

Determining module 1402

Control module 1404

Collection module 1403

FIG. 15

1600

Electronic device

Antenna

Antenna

| Receiver 1601 | Transmitter 1602 |

Processor 1603

| Memory 1604 | Application processor 16031 | Communication processor 16032 |

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012065829 A1
- US 2019008347 A1
- US 2005273967 A1
- US 2014088761 A1